(19) Europäisches Patentamt
European Patent Office
Office européen des brevets

(11) **EP 4 300 951 B1**

(12) **EUROPEAN PATENT SPECIFICATION**

(45) Date of publication and mention
of the grant of the patent:
**11.03.2026 Bulletin 2026/11**

(21) Application number: **22820402.0**

(22) Date of filing: **26.04.2022**

(51) International Patent Classification (IPC):
*H04N 9/31* (2006.01)        *G03B 21/14* (2006.01)

(52) Cooperative Patent Classification (CPC):
**H04N 9/3185; G03B 21/142; G03B 21/147;
G03B 21/26; H04N 9/3194**

(86) International application number:
**PCT/KR2022/005911**

(87) International publication number:
**WO 2022/260273 (15.12.2022 Gazette 2022/50)**

(54) **ELECTRONIC APPARATUS AND CONTROL METHOD THEREOF**

ELEKTRONISCHE VORRICHTUNG UND STEUERUNGSVERFAHREN DAFÜR

APPAREIL ÉLECTRONIQUE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.06.2021 KR 20210075553
27.09.2021 KR 20210127470**

(43) Date of publication of application:
**03.01.2024 Bulletin 2024/01**

(73) Proprietor: **Samsung Electronics Co., Ltd.
Suwon-si, Gyeonggi-do 16677 (KR)**

(72) Inventors:
 • **PARK, Jaesung
   Suwon-si Gyeonggi-do 16677 (KR)**
 • **KIM, Jiman
   Suwon-si Gyeonggi-do 16677 (KR)**
 • **JUNG, Seongwoon
   Suwon-si Gyeonggi-do 16677 (KR)**

(74) Representative: **Appleyard Lees IP LLP
15 Clare Road
Halifax HX1 2HY (GB)**

(56) References cited:
WO-A1-2006/008791      JP-A- 2001 083 949
JP-A- 2013 192 098      KR-A- 20020 001 363
KR-A- 20030 062 880      KR-A- 20090 090 682
KR-A- 20090 090 682      KR-A- 20180 103 277
KR-A- 20190 099 509      US-A1- 2009 091 714
US-A1- 2018 139 427

## Description

### Technical Field

The disclosure relates to an electronic apparatus and a control method thereof and, more particularly to, an electronic apparatus, which projects an image and a control method thereof.

### Background Art

Recently, various projects are being utilized by development of electronic technology and optical technology. A projector means an electronic apparatus that projects light onto a projection surface so that an image is formed on a projection surface.

When an image is projected by using a projector, if the projector is placed to be upright in a flat space in a direction of a projection surface, an image of a rectangular shape is displayed on a projection surface. If not, an image in which top, bottom, left, or right have distortion or an image which is rotated may appear on the projection surface. This distortion is called a keystone effect.

In the related art, a projector captures a projection surface by using an image sensor, processes a captured image, and calculates a distorted angle between the projection surface and the projector to use the image. In this case, a correction process to make an optical axis of a projector and a measurement axis of an image sensor consistent needs to be performed, and in this case, if an error occurs in this correction process, this error may significantly affect angle calculation. In addition, there is a problem in that a lot of calculation is required for a process of handling captured images by an image sensor.

US 2009/091714 A1 describes defining a bounding box for projected images. JP 2001 083949 A describes an image projecting device. KR 2009 0090682 A describes an image distortion compensation apparatus and method. WO 2006/008791 A1 describes an image projecting method, projector and computer program. JP 2013 192098 A provides a system which projects an image including a marker on a projection surface, and corrects a projection position of the marker based on correction information received from a terminal device, and an image obtained by capturing an area including the marker on the projection surface. JP 2013 192098 A further provides an interface allowing a user to set a projection target position on a screen of the terminal device.

### Disclosure

### Task to be solved

Accordingly, an aspect of the disclosure is to provide an electronic apparatus to perform keystone correction to project an image onto a guide area set by a user and a control method thereof.

### Technical Solution

In accordance with an aspect of the disclosure, an electronic apparatus as defined by claim 1 of the claims appended hereto is provided.

In addition, the processor is configured to, based on the guide area being included in the area identified based on the third information, perform keystone correction to project an image onto a rectangular area of a maximum size corresponding to the aspect ratio of the input image in the guide area.

In addition, the processor is configured to, based on the area identified based on the third information being included in the guide area, perform keystone correction to project an image onto a rectangular area of a maximum size corresponding to the aspect ratio of the input image in the area identified based on the third information.

Here, each of the plurality of markers may be positioned in an area inwards by a preset ratio with reference to four vertexes of the test image. In this case, the processor is configured to obtain fourth information indicating a position of a vertex area of the test image in the test image based on the first information and the preset ratio, obtain the third information in the captured image based on the fourth information and a transformation matrix. Here, the transformation matrix may be obtained based on a mapping relation between the first information and the second information.

In addition, each of the plurality of markers may be in a pattern format in which a black area and a white area are configured by a preset ratio in each of a plurality of directions.

In addition, the processor may correct information about the guide area based on posture information of the external device, and perform the keystone correction based on the third information and the corrected information about the guide area.

Here, the information about the guide area may include coordinate information about four vertexes of the guide area in the captured image.

A user terminal as defined by claim 6 of the claims appended hereto is provided.

In addition, the processor is configured to identify the second information indicating a position of each of the plurality of markers in the captured image capturing the projection surface.

The processor is configured to, based on a specific guide GUI being selected by a user input to adjust at least one of a size or a position of the guide GUI, obtain the information about the guide area corresponding to the selected guide GUI, and the information about the guide area may include coordinate information about four vertexes of the guide area in the captured image.

In addition, the processor is configured to control the display so that the guide GUI is overlapped with the captured image and displayed, and the guide GUI may have a rectangular line shape.

In addition, the processor is configured to identify a recommended position to provide the guide GUI by analyzing the captured image and control the display to display the guide GUI and recommendation information on the recommended position.

In addition, a sensor is further included, and the processor may correct the information about the guide area based on the posture information of the user terminal obtained through the sensor.

In addition, a method of controlling an electronic apparatus as defined by claim 11 of the claims appended hereto is provided.

In addition, the performing the keystone correction may include, based on the guide area being included in the area identified based on the third information, performing keystone correction to project an image onto a rectangular area of a maximum size corresponding to the aspect ratio of the input image in the guide area.

**Effect of Invention**

According to various embodiments above, accurate keystone correction may be performed based on a guide area set by a user and thus, image projection to a projection area desired by a user is available. Therefore, user convenience would be improved.

**Brief Description of Drawings**

FIGS. 1A and 1B are diagrams illustrating a concept of a keystone correction method and a coordinate system for assisting understanding.

FIG. 2 is a block diagram illustrating a configuration of a projector according to one or more embodiments.

FIGS. 3A to 3E are diagrams illustrating a test image according to one or more embodiments.

FIGS. 4A and 4B are diagrams illustrating coordinate information according to one or more embodiments.

FIGS. 5A to 5C are diagrams illustrating a method for setting a guide area according to an example.

FIGS. 6A to 6C are diagrams for sequentially describing a keystone correction method according to an example.

FIG. 7 is a block diagram illustrating a configuration of a user terminal according to one or more embodiments.

FIGS. 8A to 8C are diagrams illustrating a method for providing a guide GUI according to an example.

FIGS. 9A and 9B are diagrams illustrating a method for obtaining roll information and pitch information according to an example.

FIGS. 10A and 10B are diagrams illustrating a guide area setting environment according to one or more embodiments.

FIG. 11 is a diagram illustrating a detailed configuration of an electronic device according to one or more embodiments.

FIG. 12 is a diagram illustrating a detailed configuration of a user terminal according to one or more embodiments.

FIG. 13 is a flowchart illustrating a method for controlling an electronic device according to one or more embodiments.

FIG. 14 is a flowchart illustrating a method for controlling a user terminal according to one or more embodiments.

**Detailed Description of Exemplary Embodiments**

The disclosure will be described in greater detail with reference to the attached drawings.

The terms used in the disclosure are briefly described, and the disclosure will be described in detail.

The terms used in the disclosure and the claims are general terms identified in consideration of the functions of embodiments of the disclosure. However, these terms may vary depending on intention, legal or technical interpretation, emergence of new technologies, and the like of those skilled in the related art. In addition, in some cases, a term may be selected by the applicant, in which case the term will be described in detail in the description of the corresponding disclosure. Thus, the term used in this disclosure should be defined based on the meaning of term, not a simple name of the term, and the contents throughout this disclosure.

Expressions such as "have," "may have," "include," "may include" or the like represent presence of corresponding numbers, functions, operations, or parts, and do not exclude the presence of additional features.

Expressions such as "at least one of A or B" and "at least one of A and B" should be understood to represent "A," "B" or "A and B."

As used herein, terms such as "first," and "second," may identify corresponding components, regardless of order and/or importance, and are used to distinguish a component from another without limiting the components.

In addition, a description that one element (e.g., a first element) is operatively or communicatively coupled with/to" or "connected to" another element (e.g., a second element) should be interpreted to include both the first element being directly coupled to the second element, and the first element being indirectly coupled to the second element through a third element.

The expression "configured to" can be used interchangeably with, for example, "suitable for," "having the capacity to," "designed to," "adapted to," "made to," or "capable of." The expression "configured to" does not necessarily mean "specifically designed to" in a hardware sense.

A singular expression includes a plural expression, unless otherwise specified. It is to be understood that terms such as "comprise" or "consist of" are used herein to designate a presence of a characteristic, number, step, operation, element, component, or a combination thereof, and not to preclude a presence or a possibility of adding one or more of other characteristics, numbers, steps, operations, elements, components or a combination thereof.

A term such as "module," "unit," and "part," is used to refer to an element that performs at least one function or operation and that may be implemented as hardware or software, or a combination of hardware and software. Except when each of a plurality of "modules," "units," "parts," and the like may be realized in an individual hardware, the components may be integrated in at least one module or chip and be realized in at least one processor.

One or more embodiments of the disclosure will be described in more detail with reference to the accompanying drawings.

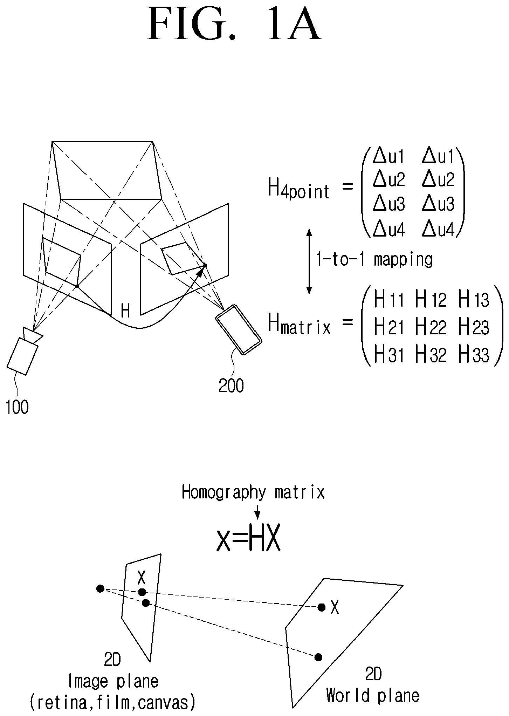

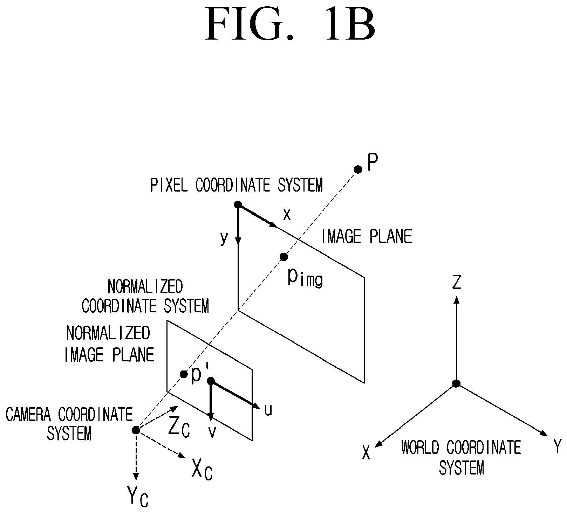

FIGS. 1A and 1B are diagrams illustrating a concept of a keystone correction method and a coordinate system for assisting understanding.

An electronic apparatus 100 having a function of projecting an image, that is, a projector function, shows a screen of a relatively accurate ratio when the projector is positioned on a straight line with a projection surface but when the projector does not satisfy the position due to condition of the space, a screen may be out of a projection surface or a screen of a diamond shape that is distorted vertically and horizontally may be projected. In this case, keystone correction may be necessary. Here, the keystone correction refers to a function of adjusting an edge portion of a looked screen, that is, the projected screen as if it is forcibly moved so that the screen is adjusted to close to an original rectangular form.

According to one or more embodiments, keystone correction may be performed by using a user terminal 200 as illustrated in FIG. 1A. For example, a projection surface 10 onto which an image is projected may be captured by using a camera provided in the user terminal 200, and keystone correction may be performed based on the captured image. Here, projective transformation may be used. The projective transformation refers to transformation that an image in a three-dimensional (3D) space is projected onto a two-dimensional (2D) space. That is, the projective transformation is a method of transforming two images looked at two different viewpoints each other. At this time, a matrix representing a relation of two different images is called homography matrix (hereinafter, H matrix). For example, the size of H matrix may be 3x3. In order to obtain the H matrix, four corresponding pair coordinates are necessary. According to an example, four corresponding pair coordinates may be coordinates on a world coordinate system.

FIG. 1B is a diagram illustrating a concept of a coordinate system for assisting understanding.

As illustrated in FIG. 1B, an image geometry includes four coordinate systems including a world coordinate system, a camera coordinate system, a normalized coordinate system, and a pixel coordinate system. Here, the world coordinate system and the camera coordinate system are 3D coordinate system and the normalized coordinate system and the pixel coordinate system are 2D coordinate system.

The world coordinate system is a coordinate system that is a reference when representing a position of an object. The world coordinate system is a coordinate system, which may be arbitrarily set and used. For example, an edge of one side of a space may be set as an original point and one side wall direction may be set to the X-axis, the other wall direction may be set to the Y-axis, and the direction facing the sky may be set to the Z-axis. The point on the world coordinate system may be represented by P(X, Y, Z).

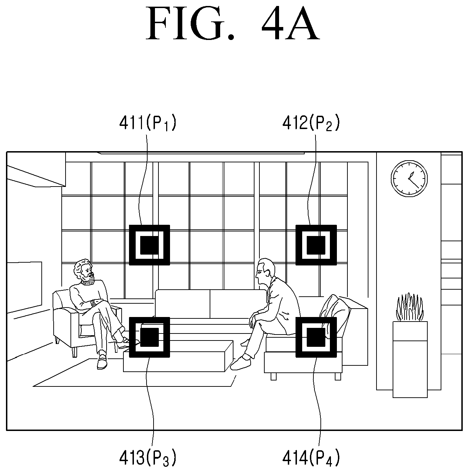

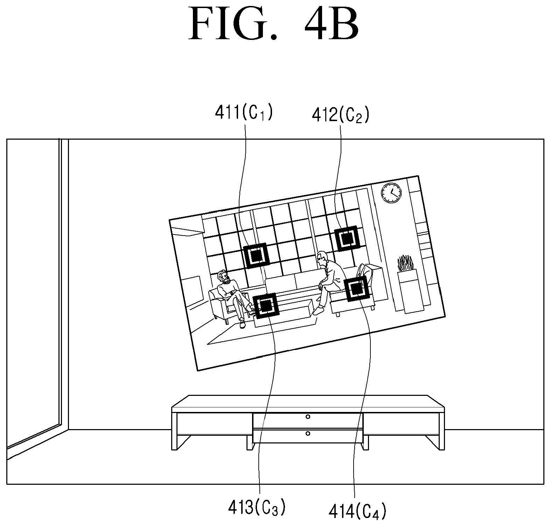

The camera coordinate system is a coordinate system based on a camera. In the camera coordinate system, as illustrated in FIG. 4, a focus (center of a lens) of a camera is set to an original point, a front optical axis direction of the camera is set to a Z axis, a downward direction of a camera is set to a Y axis, and a right direction is set to an X axis. A point on the camera coordinate system may be represented as Pc (Xc, Yc, Zc).

The pixel coordinate system is referred to as an image coordinate system. The pixel coordinate system is a coordinate system for an image actually viewed by the eye, and as shown in FIG. 4, an upper left edge of the image is an original point, a right direction is an X-axis increasing direction, and a downward direction is in a Y-axis increasing direction. A plane determined by the X-axis and the Y-axis of the pixel coordinate system is called an image plane.

In a geometrical point of view, one point $P = (X, Y, Z)$ on the 3D space is projected onto a point $p_{img} = (x, y)$ of the image plane past a focal point (or focal point of the lens) of the camera. All 3D points on a ray connecting the point P and the point $p_{img}$ are all projected to the $p_{img}$. Therefore, the $p_{img}$ may be uniquely determined from the 3D point P, but on the contrary, obtaining P from the image pixel $p_{img}$ is impossible without additional information. The unit of the pixel coordinate system is a pixel and may be denoted as $p_{img} = (x,y)$.

The normalized image coordinate system may be an image coordinate system in which impact of inner parameter of a camera is removed. The normalized image coordinate is a coordinate system in which a unit of a coordinate system is removed (normalized), and defines a virtual image plane having a distance from a focal point of a camera being 1. That is, the above image plane may be an image plane moved to a point that the distance from the camera focus is 1 by moving the original image plane in parallel. The original point of the normalized coordinate system is the midpoint of the image plane (intersection with the optical axis Zc). The point on the normalized coordinate system may be denoted as p'=(u, v). Even though the same scene is captured at the same position and the same angle, different images are obtained according to the used camera or according to the camera setting. A normalized image plane may be used since it is more effective to analyze common geometric characteristics in a normalized image plane from which these elements have been removed and establish a theory.

In the meantime, a shape or a material of a projection surface may significantly affect distortion or quality of an output image, and it is difficult to perform keystone correction by a projector itself without distortion.

Accordingly, hereinafter, various embodiments of performing an accurate keystone correction so that an image is projected on an area desired by a user based on a guide area set in an image captured by the user terminal 200 will be described.

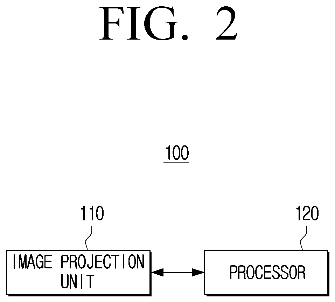

FIG. 2 is a block diagram illustrating a configuration of a projector according to one or more embodiments.

Referring to FIG. 2, the electronic apparatus 100 may include an image projection unit 110 and at least one processor 120. The electronic apparatus 100 may be implemented with a projector that projects an image onto a wall or a projection surface or various types of devices having an image projection function.

The image projection unit 110 may perform a function of projecting light to express an image to the outside and outputting an image on a projection surface. Here, the projection surface is a part of a physical space to which an image is output or a separate projection surface. The image projection unit 110 may include various specific configurations like at least one light source among a lamp, LED, laser, a projection lens, a reflector, or the like.

The image projection unit 110 may project an image by one of various projection schemes (e.g., cathode-ray tube (CRT) scheme, Liquid Crystal Display (LCD) scheme, Digital Light Processing (DLP) scheme, laser scheme, etc.). The image projection unit 110 may include at least one light source.

The image projection unit 110 may output an image at a 4:3 aspect ratio, a 5:4 aspect ratio, or a 16: 9 wide aspect ratio according to the use of the electronic apparatus 100 or the setting of a user and may output an image to various resolutions such as WVGA854*480, SVGA800*600, XGA1024*768, WXGA1280*720, WXGA1280*800, SXGA1280*1024, UXGA1600*1200, Full HD1920*1080 according to an aspect ratio.

The image projection unit 110 may perform various functions for adjusting the projection image by the control of the processor 120. For example, the image projection unit 110 may perform functions such as zoom, lens shift, or the like.

At least one processor 120 (hereinafter, processor) is electrically connected to the display 110 to control the overall operation of the electronic apparatus 100. The processor 120 may be configured with one or a plurality of processors. Specifically, the processor 120 may perform an operation of the electronic apparatus 100 according to various embodiments of the disclosure by executing at least one instruction stored in a memory (not shown).

The processor 120 according to one or more embodiments may be implemented with, for example, a digital signal processor (DSP) for image-processing of a digital image signal, a microprocessor, a graphics processor (GPU), an AI (AI) processor, a neural processor (NPU), a time controller (TCON), or the like, but the processor is not limited thereto. The processor 120 may include, for example, and without limitation, one or more among a central processor (CPU), a micro controller unit (MCU), a micro processor (MPU), a controller, an application processor (AP), a communication processor (CP), an advanced reduced instruction set computing (RISC) machine (ARM) processor, a dedicated processor, or may be defined as a corresponding term. The processor 120 may be implemented in a system on chip (SoC) type or a large scale integration (LSI) type which a processing algorithm is built therein, application specific integrated circuit (ASIC), or in a field programmable gate array (FPGA) type.

The processor 120 may control the image projection unit 110 to project a test image including a plurality of markers (or tag) to the projection surface. For example, the test image may be an image including only a plurality of markers. In the meantime, the test image may include another image other than a plurality of markers, but another image (e.g., background image) may be included not to be overlapped at a position where a plurality of markers are included.

According to an example, each of the plurality of markers may be in a pattern format in which a black area and a white area are configured by a preset ratio in each of a plurality of directions.

According to an example, a plurality of markers may be positioned at a predefined position, for example, an area inwards from four vertexes of a test image of the image by a threshold distance. For example, a plurality of markers may be positioned at an area inwards by a preset ratio with respect to a size of an entire image based on four vertexes of the test image.

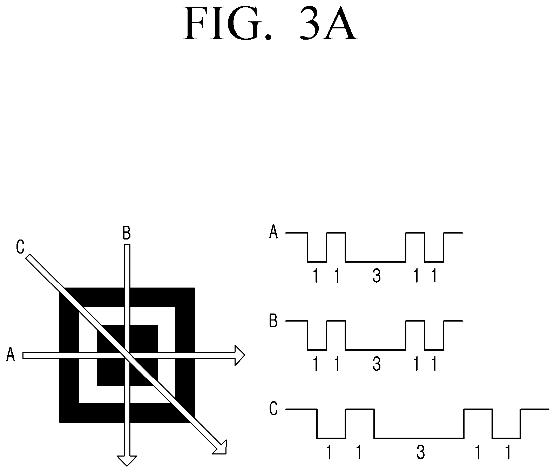

FIGS. 3A to 3E are diagrams illustrating a test image according to one or more embodiments.

FIG. 3A is a diagram illustrating a shape of a marker (or tag) according to an example. Here, the marker is replaceable with various terms such as a tag, a pattern, or the like. In the marker, a black area and a white area may have a preset ratio in a plurality of directions, e.g., left/right, up/down, diagonal directions. For example, as illustrated, a ratio of a white pixel and a black pixel may necessarily be 1:1:3:1:1 in any of A, B, C directions. In this case, identification of a marker in all 360° directions is available. The number is merely an example, and may be changed diversely to 1:2:3:2:1, 1:1:1:4:1:1, or the like. If the pattern is pre-determined by the electronic apparatus 100 projecting a test image including a marker and a device (e.g., electronic apparatus 100 or user terminal 200) identifying the position of the marker in the captured image, the ratio may be changed to any format.

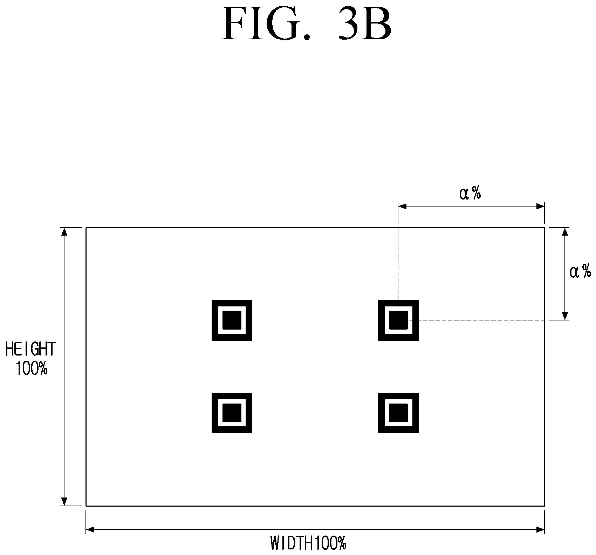

FIG. 3B is a diagram illustrating a position of a marker according to an example.

The position of the marker in the test image may be a pre-known position in the electronic apparatus 100 projecting a test image or at least one of the electronic apparatus 100 analyzing the captured image or the user terminal 200. In the meantime, the electronic apparatus 100 may transmit the corresponding position information to a counterpart device, or a counterpart device may receive the corresponding position information through an external server. For example, as illustrated in FIG. 3B, a plurality of markers may be positioned in an area inwards by $\alpha$% in a vertical direction or a horizontal direction from four vertexes in the image.

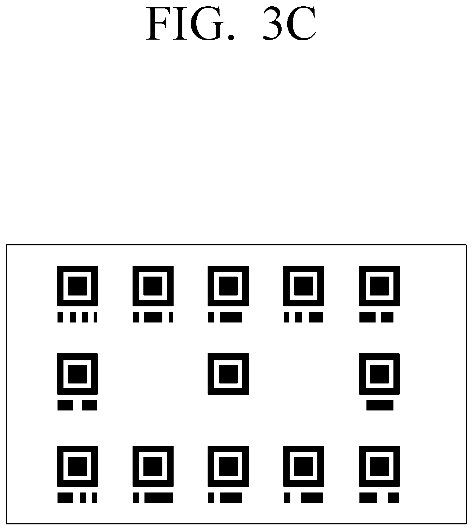

FIG. 3C is a diagram illustrating a position of a marker according to another example.

According to an example, when the projection surface is distorted according to an example, the distortion phenomenon of the projection surface cannot be confirmed or corrected by the coordinates of the four points. In this case, as shown in FIG. 3C, a plurality of markers located in various areas may be used. However, in this case, each marker needs to have a different shape in order to check which position each marker corresponds. Accordingly, as shown in FIG. 3C, markers of various shapes may be used as a position marker. As such, when the distortion of the projection surface is identified using the plurality of markers, the position of the projection image may be adjusted in the distortion area, or the size of the image may be scaled to solve image distortion caused by projection surface distortion.

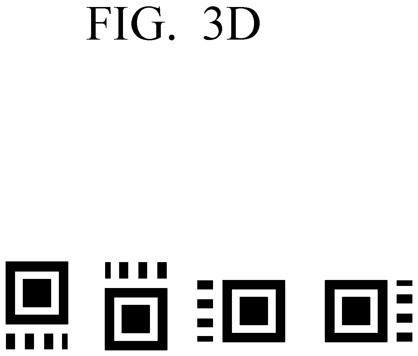

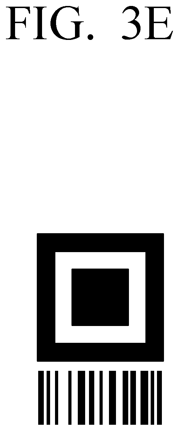

FIGS. 3D and 3E are diagrams illustrating markers of various shapes.

According to an example, a marker may be designed similar to a barcode, converted to an on/off digital code through black and white of a specific point so that to which position the marker corresponds may be easily identified. According to an example, as illustrated in FIGS. 3D and 3E, length of a marker indicating on/off or a position of on/off may be freely adjusted.

Referring back to FIG. 2, the processor 120 identifies first information (for example, first coordinate information) indicating a position of each of the plurality of markers in the test image and second information based on an image (hereinafter, referred to as a captured image) capturing the projection surface in the external device. Here, the second information is second coordinate information indicating a position of each of the plurality of markers in the captured image. In this case, the external device may be the user terminal 200 shown in FIG. 1, and hereinafter, the external device is assumed and described as the user terminal 200.

According to an example, the processor 120 may obtain first information indicating a position of each of a plurality of markers in an original test image projected through the image projection unit 110.

In addition, the processor 120 may receive second information from the user terminal 200 or obtain second information based on the captured image received from the user terminal 200. For example, the user terminal 200 may directly identify second information indicating the positions of the plurality of markers in the captured image and transmit the second information to the electronic apparatus 100, and the processor 120 may directly obtain the second information from the received captured image.

EP 4 300 951 B1

Hereinafter, for convenience of description, a coordinate in the original test image may be described as a projector coordinate system, and a coordinate in the captured image may be described as a camera coordinate system. Accordingly, the first information may correspond to the projector coordinate system, and the second information may correspond to the camera coordinate system.

FIGS. 4A and 4B are diagrams illustrating coordinate information according to one or more embodiments.

FIG. 4A is a diagram illustrating first information of a plurality of markers (411, 412, 413, 414) in an original test image, that is, a projector coordinate system, and the first information may be P1, P2, P3, and P4. For example, the first information may be calculated based on a specific point of the plurality of markers (411, 412, 413, 414), for example, a center point.

FIG. 4B is a diagram illustrating second information of a plurality of markers (411, 412, 413, 414) in a captured image, that is, a projector coordinate system, and the second information may be C1, C2, C3, and C4. For example, the second information may be calculated based on a specific point (point same as the first information) of the plurality of markers (411, 412, 413, 414), for example, a center point.

Returning to FIG. 2, the processor 120 may perform keystone correction such that an image corresponding to the guide area is projected based on the information about the first information, the second information, and the guide area. Here, the guide area may be an area selected by a user on the screen of the user terminal 200. For example, the information about the guide area may include coordinate information of four vertex areas of the guide area in the image. Here, the vertex area may be a point where each edge area meets and may be four points.

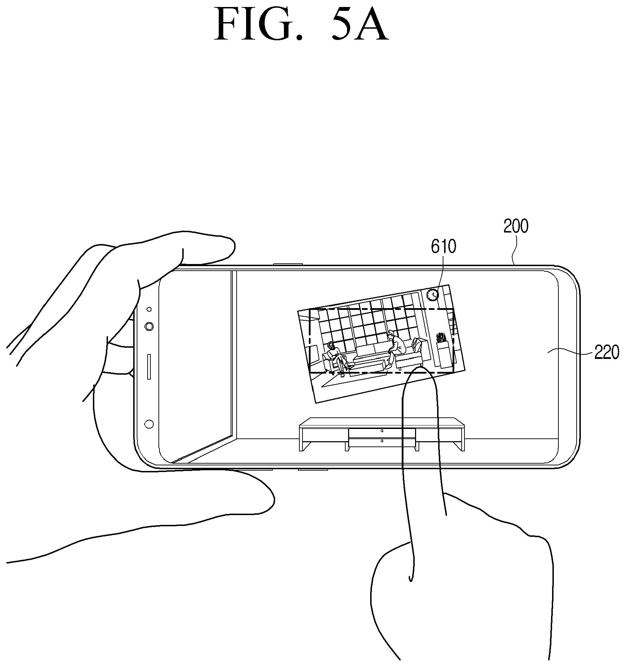

FIGS. 5A to 5C are diagrams illustrating a method for setting a guide area according to an example.

Referring to FIGS. 5A to 5C, a user may identify a captured image provided on a display 220 of the user terminal 200 and may set a desired projection region through the guide GUI. Here, the guide GUI may have an empty rectangular line shape, but is not necessarily limited thereto. According to one or more embodiments, the guide GUI may be provided with a predetermined aspect ratio (or rate) and size in an arbitrary area, for example, a central area of the screen, but is not limited thereto. According to another embodiment, the guide GUI may be provided in a corresponding aspect ratio based on the aspect ratio information of the projection image, and the aspect ratio information of the projection image may be obtained from the electronic apparatus 100 or may be predicted by the user terminal 200 based on the captured image. For example, the aspect ratio of the guide GUI may include various aspect ratios such as 21:9, 16:9, 4:3, and the like.

In addition, the guide GUI in a preset size may be provided first to a preset position, and at least one of a size and a position may be changed through a user manipulation (e.g., touch drag input, etc.). The embodiment is not limited thereto, and a guide GUI in a size desired by a user may be dragged to a position desired by a user.

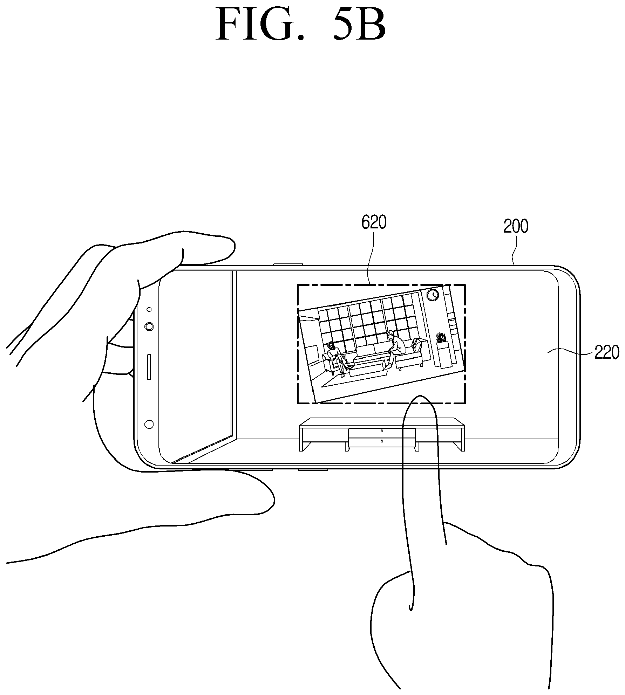

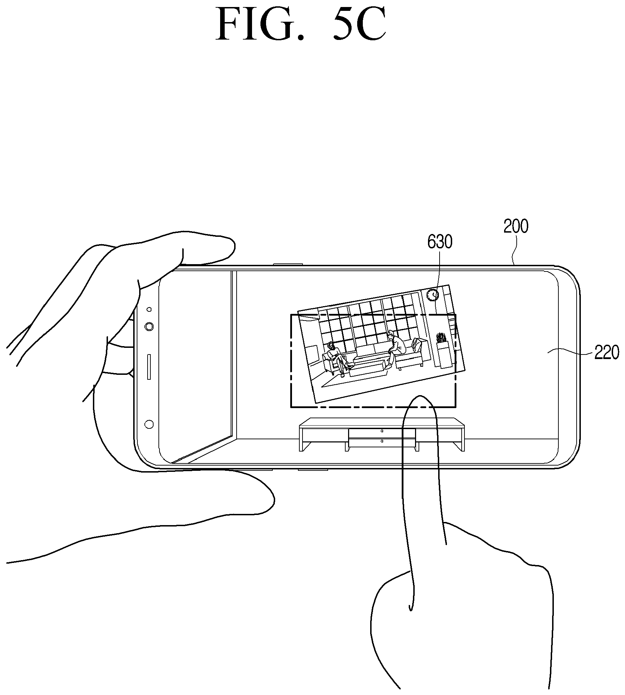

FIG. 5A shows a case where the guide GUI 610 is set to be included in an area where an image is projected, FIG. 5B shows a case where the guide GUI 620 is set to include an area where an image is projected, and FIG. 5C shows a case where a guide GUI 630 is set so that a part of a guide area set by a guide GUI 630 and a part of an area where an image is projected is overlapped.

Returning to FIG. 2, based on the first information and the second information, the processor 120 obtains third information (camera coordinate system) (for example, third coordinate information) indicating the position of each vertex of the test image in the captured image, and performs keystone correction based on the third information and the information about the guide area. Here, the information about the guide area includes coordinate information (camera coordinate system) for four vertexes of the guide GUI in the captured image.

According to an example, the processor 120 may previously know the first information (as the test image is projected), and may receive the second information and the information about the guide area from the user terminal 200. According to another example, the processor 120 may identify the second information and the information about the guide area based on the captured image received from the user terminal 200.

According to an example, the processor 120 may obtain the fourth information (e.g., fourth coordinate information) indicating positions of each of the vertex area in the test image in the projector coordinate system based on the first information and the position information of the marker, and may obtain the third information in the captured image based on the fourth information and conversion matrix, that is, the first H matrix.

In this case, the first H matrix may be obtained based on a mapping relation between the first information and the second information. According to an example, the processor 120 may know four coordinate pairs based on the first information (P1, P2, P3, P4) and the second information (C1, C2, C3, C4) and may obtain the first H matrix.

The processor 120 may convert four vertex coordinates, that is, fourth information, in the projector coordinate system into a camera coordinate system, that is, third information, by using a first H matrix. For example, the processor 120 may prestore four vertex coordinate information of the projector coordinate system, that is, fourth information in the test image, or may calculate four vertex coordinates of the projector coordinate system, that is, fourth information based on the first information.

For example, each of a plurality of markers may be positioned in an area inwards by a preset ratio with respect to four vertexes of the test image. In this case, the processor 120 may obtain the first information indicating a position of a marker and fourth information indicating positions of each of a vertex area in the test image based on a preset ratio. Here, the fourth information may correspond to the projector coordinate system.

The processor 120 may obtain the third information by converting four vertexes coordinate (fourth information) in the projector coordinate system to a camera coordinate system by using the first H matrix.

The processor 120 may perform keystone correction based on the third information and the coordinate information of the guide area.

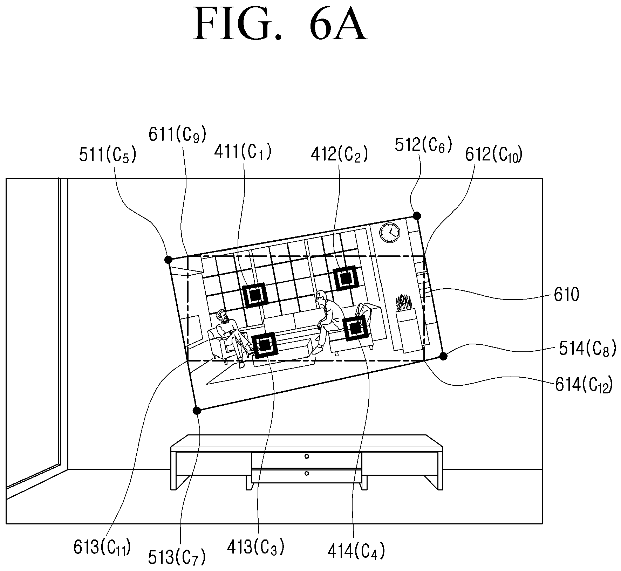

FIGS. 6A to 6C are diagrams for sequentially describing a keystone correction method according to an example.

As illustrated in FIG. 6A, the processor 120 obtains the third information (C5, C6, C7, C8) corresponding to the four vertexes (511, 512, 513, 514) of the projected image in the captured image, that is, the third information of the camera coordinate system.

In addition, the processor 120 may obtain fifth information corresponding to four vertexes (611, 612, 613, 614) of the guide area 610, for example, the fifth coordinate information (C9, C10, C11, C12), that is, the fifth information of the camera coordinate system.

The processor 120 may perform keystone correction based on the guide area identified based on the fifth information (C9, C10, C11, C12) and an area where the area identified based on the third information is overlapped.

According to one or more embodiments, the processor 120 identifies a rectangular area of the maximum size corresponding to the aspect ratio of the input image in the area (hereinafter, overlap area) overlapped, and performs keystone correction so that the image is projected on the identified rectangular area.

According to an example, as illustrated in FIG. 5A, if the guide area 610 is included in the area identified based on the third information, the processor 120 may perform the keystone correction so that the image is projected on the maximum rectangular area corresponding to the aspect ratio of the input image in the guide area.

According to another example, as illustrated in FIG. 5B, when an area identified based on the third information is included in the guide area 620, the processor 120 may perform keystone correction so that an image is projected on the maximum rectangular area corresponding to the aspect ratio of the input image in the area identified based on the third information.

According to another example, as illustrated in FIG. 5C, the processor 120 may, if a part of the guide area 630 is overlapped with a part of an area identified based on the third information, perform keystone correction so that an image is projected on a maximum rectangular area corresponding to the aspect ratio of the input image in the overlap area.

The processor 120 identifies a rectangular area having a maximum size corresponding to an aspect ratio of an input image in an overlapped area, and may obtain sixth information (for example, sixth coordinate information) corresponding to the identified rectangular area. In this case, the processor 120 may identify whether the edge of the vertex of the rectangle and the edge of the overlap area meet each other while expanding the rectangle to the same size in the vertical and horizontal directions at the center point where the vertexes of the overlap area are connected diagonally and meet each other. In addition, when the vertex of the expanded rectangle meets the edge of the overlap area, the processor 120 may expand a small side of the rectangle in a preset pixel unit and may expand a large side of the rectangle to correspond to the aspect ratio. Subsequently, the processor 120 may identify a rectangular area of a maximum size at a position where a vertex corresponding to the expanded rectangle meets an edge of the overlap area.

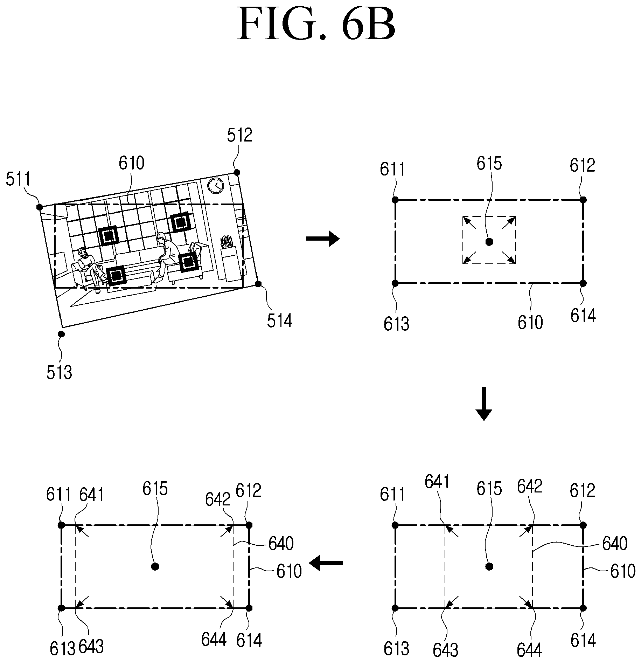

Referring to FIG. 6B, when fifth information (C9, C10, C11, C12) corresponding to four vertexes (611, 612, 613, 614) of the guide area 610 is obtained, the rectangle is expanded with a center point 615 where each vertex is diagonally connected and meet with each other as a starting point.

According to an example, by enlarging the rectangle 640 in the same size vertically and horizontally from the starting point 615, it is identified whether there is a part exceeding the guide area 610. When there is no part exceeding the guide area 610, the expanding is made by a preset ratio (e.g., 5%) of the screen, and it is identified a positon at which the vertex of the expanded rectangle meets the edge of the guide area 610.

Then, when any one of the edge of the guide area 610 and the vertexes (641, 642, 643, 644) of the rectangle 640 meet, a preset pixel unit (for example, 1 px) with reference to a small side may expand a rectangle in accordance with the ratio. For example, if meeting with one point of the guide area 610 at the upper left, upper right, lower left, lower right edges, etc. of the rectangle 640, it is checked whether the vertex and the edge of the guide area 610 meet by moving to the opposite edge by 1 px and there is a contact point by expanding the size by 1 px. In the upper left, upper right, lower left, lower right edges, or the like, of the expanded rectangle 640, if vertex which is not in an opposite angle is met, it is identified whether there is a contact point by transversely moving by 1 px in an opposite direction of horizontal direction and expanding the size by 1 px.

Then, if the vertexes (641, 644) present in the opposite angle of the expanded rectangle 640 meet the boundary line of the guide area 610, the expansion is terminated and the sixth information (g1, g2, g3, g4) of the last vertex (641, 642, 643, 644) is obtained. In addition, in order to prevent the position of the rectangle from moving infinitely, the corresponding process may be terminated when the rectangle moves again to the moving point in the same situation.

Returning to FIG. 2, the processor 120 may perform the keystone correction by applying a conversion matrix, for example, an inverse matrix of the second H matrix to the obtained sixth information (g1, g2, g3, g4). Here, the second H matrix may be obtained based on the third information and the vertex coordinate of the test image. For example, when the third information, that is, four vertexes coordinates are d1, d2, d3, d4, and four vertexes coordinates of the real projection point of the test image are e1, e2, e3, e4, the second H matrix may be obtained based on four pairs of (d1, e1), (d2, e2), (d3, e3), (d4, e4). For example, if the projector is an FHD resolution projector, e1, e2, e3, e4 may be (0,0), (1920,0), (0,1080), (1920,1080).

The processor 120 may obtain the coordinate of a projection area to be projected by the electronic apparatus 100 by applying an inverse matrix of the second H matrix to the coordinate information of the vertex corresponding to the maximum rectangle, that is, sixth information (g1, g2, g3, g4). That is, if the electronic apparatus 100 projects an image based on the corresponding coordinate, a user may view a maximum size rectangular area within the guide area.

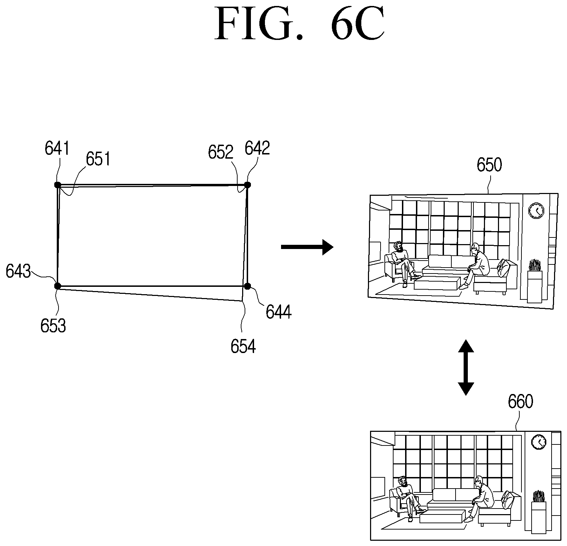

FIG. 6C is a diagram illustrating a projection image according to keystone correction according to one or more embodiments.

In FIG. 6C, vertexes 641, 642, 643, and 644 correspond to sixth information, and an area identified by a corresponding vertex refers to a rectangular area of the maximum size obtained in FIG. 6B. In this case, the processor 120 may determine the coordinates of the image to be projected by applying the inverse matrix of the second H matrix to the sixth information. That is, the processor 120 may determine 651, 652, 653, 654, which is the vertex coordinates of the keystone corrected image by applying the inverse matrix of the second H matrix at the coordinates of vertices 641, 642, 643, and 644. In this case, since the processor 120 projects an image based on the vertexes 651, 652, 653, and 654, the processor 120 may project a distorted image 650, but the user may view a rectangular image 660 corresponding to the guide area.

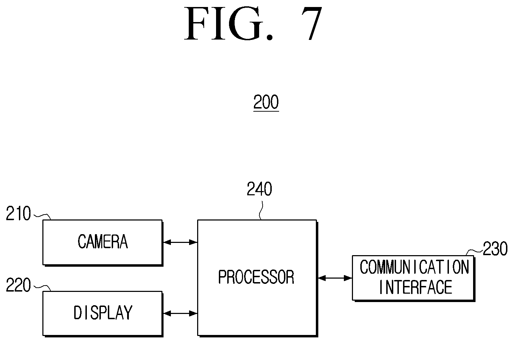

FIG. 7 is a block diagram illustrating a configuration of a user terminal according to an embodiment.

Referring to FIG. 7, the user terminal 200 includes a camera 210, a display 220, a communication interface 230, and a processor 240.

The camera 210 may perform capturing by being turned on according to a predetermined event. The camera 210 may convert the captured image into an electrical signal and generate image data based on the converted signal. For example, a subject may be converted into an electrical image signal through a charge coupled device (CCD) sensor, and the converted image signal may be converted into an amplified signal and a digital signal and then processed.

According to an example, the camera 210 may obtain a captured image by capturing a projection surface onto which an image is projected.

The display 220 may be implemented as a display including a self-emitting element or a display including a non-self-limiting element and a backlight. For example, the display 220 may be implemented as a display of various types such as, for example, and without limitation, a liquid crystal display (LCD), organic light emitting diodes (OLED) display, light emitting diodes (LED), micro LED, mini LED, plasma display panel (PDP), quantum dot (QD) display, quantum dot light-emitting diodes (QLED), or the like. In the display 220, a backlight unit, a driving circuit that may be implemented as an a-si TFT, low temperature poly silicon (LTPS) TFT, organic TFT (OTFT), or the like, may be included as well. The display 220 may be implemented as a touch screen coupled to a touch sensor, a flexible display, a rollable display, a three-dimensional (3D) display, a display in which a plurality of display modules are physically connected, or the like. In addition, the display 220 may include a touch screen therein and may be implemented to execute a program using a finger or a pen (e.g., stylus pen).

At least one communication interface 230 (hereinafter, communication interface) may be implemented with various interfaces according to an implementation example of the user terminal 200. For example, the communication interface 230 (hereinafter, communication interface) may communicate with an external device (e.g., user terminal 200), external storage medium (e.g., USB memory), external server (e.g., webhard) through various types of digital interface, an access point (AP)-based Wi-Fi (wireless LAN network), Bluetooth, Zigbee, wired/wireless local area network (LAN), wide area network (WAN), Ethernet, IEEE 1394, high definition multimedia interface (HDMI), universal serial bus (USB), mobile high-definition link (MHL), advanced encryption standard (AES)/European broadcasting union (EBU), optical, coaxial, or the like.

The implementation format of the processor 240 is the same or similar to the implementation format of the processor 120 illustrated in FIG. 2, and a detailed description will be omitted. A function of the processor 240 to be described below may be provided through a specific application communicating with the electronic apparatus 100, but is not necessarily limited thereto. According to an example, a specific application may be implemented with an application communicating with the electronic apparatus 100 through a server (not shown) and an application directly communicating with the electronic apparatus 100.

The processor 240 may control the camera 210 to capture a projection surface onto which a test image including a plurality of markers are included.

In addition, the processor 240 may control the display 220 to display a guide GUI for setting the captured image and the projection area obtained by the camera 210. In this case, the captured image and the guide GUI may be provided as a live view, but are not limited thereto. That is, a pre-stored captured image may be displayed, and a guide GUI may be displayed on the displayed captured image. According to one or more embodiments, the guide GUI may be provided with a predetermined aspect ratio (or rate) and size in an arbitrary area, for example, a central area of the screen, but is not limited thereto. According to another example, the guide GUI may be provided with corresponding aspect ratio based on the aspect ratio of the projection image, and the aspect ratio information of the projection image may be received from the electronic apparatus 100 or predicted by the processor 240 based on the captured image. For example, the aspect ratio of the guide GUI may include various aspect ratios like 21:9, 16:9, 4:3, or the like.

Subsequently, the processor 240 may, if a specific guide GUI is selected by a user input for adjusting at least one of the size or position of the guide GUI, obtain information about the guide area corresponding to the selected guide GUI. Here, the information about the guide area may include coordinate information (fifth information (C9, C10, C11, C12)) of four vertexes of the guide area in the captured image.

The processor 240 may obtain the first information indicating positions of each of a plurality of markers in the test image, second information indicating positions of each of the plurality of markers, and information about the guide area corresponding to the guide GUI. For example, the first information may be received from the electronic apparatus 100, the second information and the information about the guide area may be obtained by analyzing the captured image.

The processor 240 may obtain keystone correction information to project an image corresponding to the guide area based on the first information, second information, and information about the guide area. For example, the processor 240 may obtain third information indicating positions of each of the vertex area of the test image in the projector coordinate system based on the first information and the second information, and may obtain the keystone correction information based on the third information and the information (fifth information) about the guide area. To be specific, the processor 240 may obtain the third information in the captured image based on the fourth information and a transformation matrix. Here, the transformation matrix may be obtained based on a mapping relation between the first information and the second information.

Each coordinate information and a calculation method of markers are the same as the description related to the electronic apparatus 100 and thus, a detailed description will be omitted.

According to an example, the processor 240 may, based on the guide area being included in the area identified based on the third information, perform keystone correction to project an image onto a rectangular area (sixth information) of a maximum size corresponding to the aspect ratio of the input image in the guide area.

Then, the processor 240 may transmit the obtained keystone correction information to the external electronic apparatus 100 through the communication interface 230.

Here, the keystone correction information may include at least one of the second information, the third information, the fourth information, the fifth information, and the sixth information. That is, although it has been described that most of the coordinate information of the user terminal 200 is obtained for convenience of description, the user terminal 00 may perform some of the above-described various processes performed by the electronic apparatus 100 and transmit the result to the electronic apparatus 100. For example, when an image capturing a projection surface is obtained through the camera 210, the processor 240 may obtain second information indicating the position of each of the plurality of markers in the captured image, and transmit the obtained second information to the electronic apparatus 100.

In the meantime, according to one or more embodiments, the processor 240 may control the communication interface 250 so that captured image is not analyzed and transmitted as it is to the electronic apparatus 100. In this case, the processor 240 may also transmit the information about the guide area (that is, the coordinate information corresponding to the guide area in the captured image).

In this case, the electronic apparatus 100 may perform keystone correction by performing a subsequent process based on at least one of the received keystone correction information or captured image. Each coordinate information used for the keystone correction and a calculation method, or the like, are the same as the coordinate information obtained by the electronic apparatus 100 and the calculation method and thus, a detailed description will be omitted.

In the meantime, according to one embodiment, the processor 240 may provide a guide GUI by analyzing the captured image.

According to one or more embodiments, the processor 240 may identify a recommended position for providing a guide GUI by analyzing a captured image, and control the display 220 to display a guide GUI and recommendation information at a recommended position. For example, when it is identified that a pattern, a distortion, and the like exist on a projection surface by analyzing the captured image, an area other than the corresponding area may be identified as a recommended position. The recommendation information may include a reason for recommending a corresponding area, or may simply provide a recommended guide GUI. According to one or more embodiments, when a recommended guide GUI and a guide GUI for setting a user are provided together, recommendation information may be provided only on the recommended guide GUI. According to another example, a guide GUI for setting a user may be first provided to a recommendation position and separate recommendation information may not be provided. According to another example, a plurality of recommended GUIs may be provided to a plurality of recommended positions and a recommendation ranking may be also provided.

According to another embodiment, the processor 240 may identify at least one of a recommended size or a recommended aspect ratio of the guide GUI by analyzing the captured image, and display the guide GUI based on at least one of the recommended size or the recommended aspect ratio. For example, the processor 240 may predict an aspect ratio of the projected image by analyzing the captured image, and may provide a guide GUI having an aspect ratio corresponding thereto. Alternatively, the processor 240 may identify a recommended size of the guide GUI in consideration of a size of a projection surface, a distortion state, and the like, by analyzing the captured image.

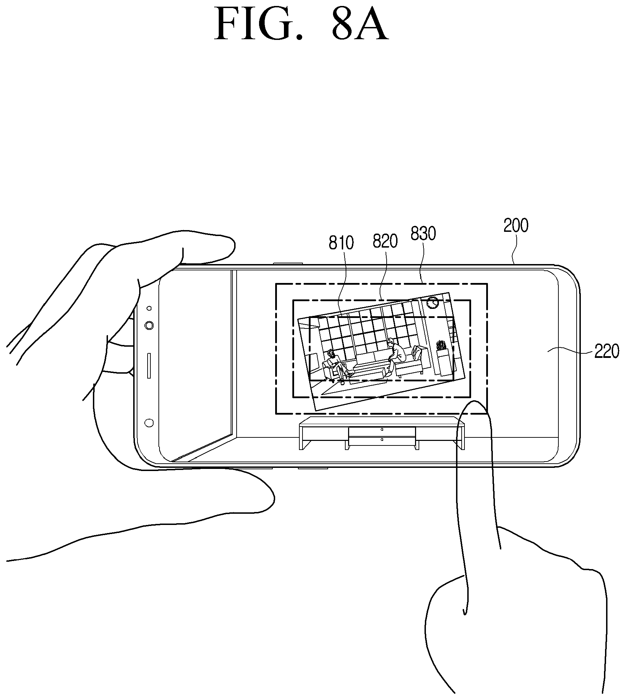

FIGS. 8A to 8C are diagrams illustrating a method for providing a guide GUI according to an example.

According to one or more embodiments, as shown in FIG. 8A, the guide GUIs (810, 820, 830) are provided in the same aspect ratio as the aspect ratio of the display 220 of the user terminal 200, and one guide GUI is provided so that the size may be adjusted. However, a plurality of guide GUIs may be simultaneously provided so that a user may select one GUI. Alternatively, the guide GUI may be implemented so that a user can directly draw on a live view screen of a captured image by a touch input. For example, according to the field of view of the camera 210 and the area size of the projection surface, the camera 210 may be moved back and forth at the current capturing position, or it may be a position that is difficult to capture due to the characteristic of an indoor space. In this case, a user's UX experience may be improved by adjusting the size of the guide GUI.

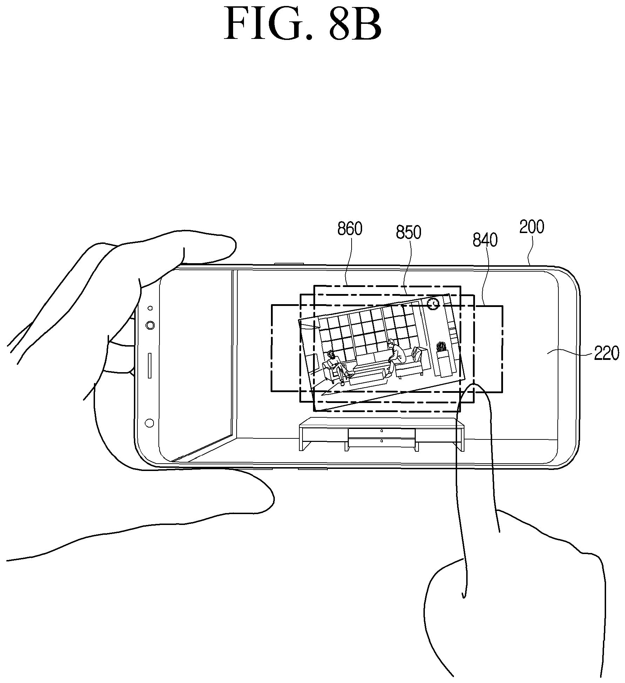

According to another example, as illustrated in FIG. 8B, a guide GUI (840, 850, 860) may be provided so that size adjustment to various aspect ratios is available regardless of the aspect ratio of the display 220. In the meantime, a plurality of guide GUIs having different aspect ratios may be simultaneously provided so that a user may select one GUI. Alternatively, the guide GUIs (840, 850, 860) may be automatically adjusted to the corresponding aspect ratio based on the aspect ratio information of the projection image.

In this case, the guide GUI (810 to 860) may be overlapped to the captured image in a square line shape and provided. That is, the guide GUI (810 to 860) may have a shape that an inside is an empty square line, but is not limited thereto, and displaying darkness and brightness inside is available.

In addition, the guide GUI (810 to 860) may be provided in various types of lines like a solid line, a dotted line, or the like. In addition, the guide GUI (710 to 760) may be provided as an augmented reality (AR) line, or the like.

In the meantime, during capturing, correction of the guide area may be necessary according to the posture of the user terminal 200 (or camera 210).

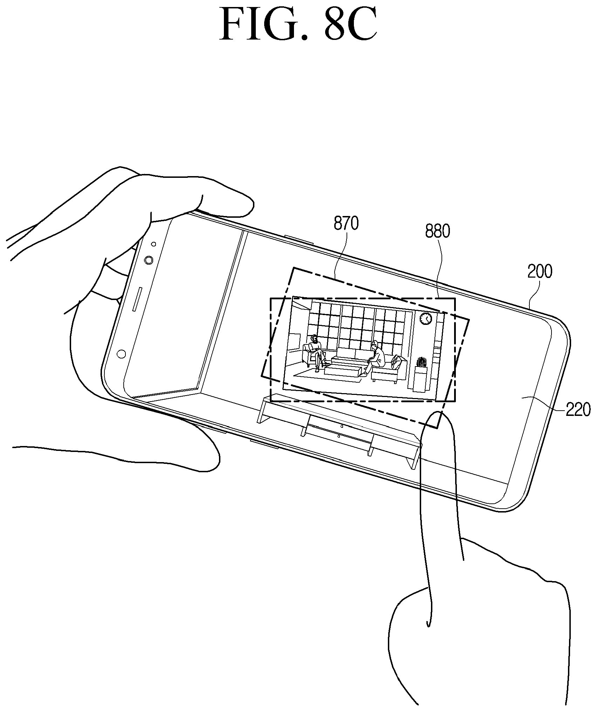

For example, as shown in FIG. 8C, when a user obliquely holds the user terminal 200 for capturing, a guide GUI 870 may not be provided as desired by the user. In this case, the processor 240 may correct 880 coordinate information of the guide GUI 870 to be perpendicular to the gravity direction based on the posture information of the user terminal 200. In addition, according to one or more embodiments, the corrected guide GUI 880 may be displayed on the display 220.

Here, the posture information may include at least one of roll information, pitch information, and yaw information. According to one or more embodiments, the roll information and the pitch information may be obtained through an acceleration sensor provided in the user terminal 200 (or gravity sensor). In addition, the yaw information may be obtained based on field of view information of a camera used for capturing a projection surface in the user terminal 200.

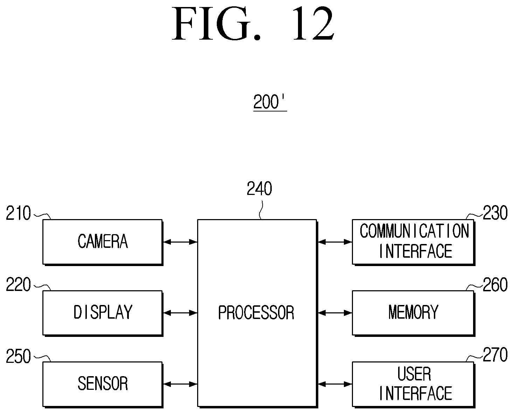

In this case, the processor 240 may obtain posture information through the sensor (FIG. 12, 250). The sensor 250 may include at least one acceleration sensor (or gravity sensor). For example, the acceleration sensor may be 3-axis acceleration sensor. The 3-axis acceleration sensor may measure gravity acceleration by axes and provide raw data to the processor 240.

In addition, according to one or more embodiments, the sensor 250 may further include at least one of a distance sensor, a geomagnetic sensor, or a gyro sensor. The distance sensor is configured to sense distance from the projection surface. The distance sensor may be implemented with various types like an ultrasonic sensor, infrared rays sensor, LiDAR sensor, RADAR sensor, photo diode sensor, or the like. A geomagnetic sensor or a gyro sensor may be used to obtain yaw information.

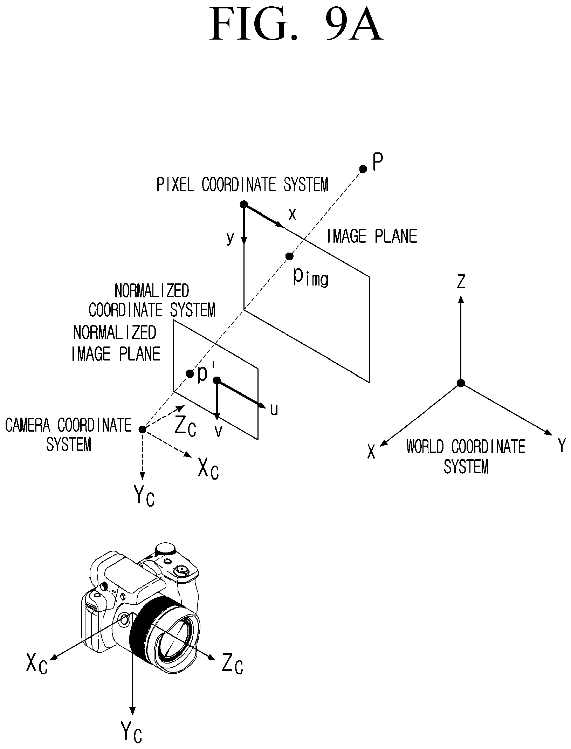

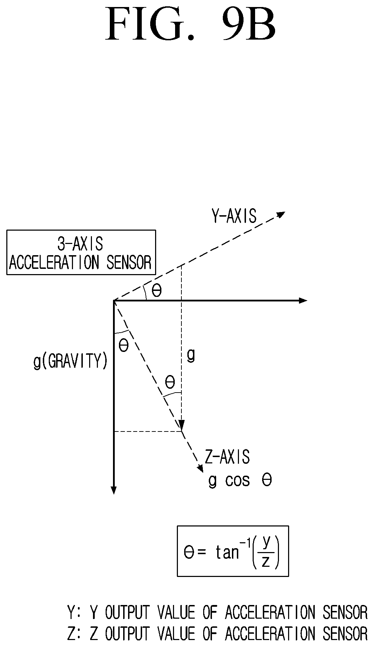

FIGS. 9A and 9B are diagrams illustrating a method for obtaining roll information and pitch information according to an example.

According to an example, when Xc, Yc, Zc axes are defined as illustrated in FIG. 9A with respect to the user terminal 200, the roll angle $\varphi$ rotating with respect to an y axis and a pitch angle $\theta$ rotating with respect to an x axis may be defined as shown below.

【Equation 1】

$$\phi = atan\left(\frac{A_Y}{\sqrt{A_X^2 + A_Z^2}}\right)$$

【Equation 2】

$$\theta = atan\left(\frac{A_X}{\sqrt{A_Y^2 + A_Z^2}}\right)$$

In Equation 1, AX, AY, and AZ are x, y, and z-axis acceleration value of an acceleration sensor provided in the user terminal 200. For example, as illustrated in FIG. 9B, a pitch angle θ may be calculated based on a relation.

The posture information related to the gravity direction, that is, the roll information and the pitch information may be obtained by using an output value of the acceleration sensor (or a gravity sensor) as described above, but the yaw information regardless of the gravity direction may be obtained by using a geomagnetic sensor or a gyro sensor or the like based on a direction arbitrarily designated by a user. However, when the gyro sensor or the like is not used, yaw information may be obtained based on the field of view information of the camera. For example, the processor 240 may obtain a center point coordinate of an image projected from a camera coordinate system based on third information (C5, C6, C7, C8) corresponding to four vertexes (511, 512, 513, 514) of the image projected from the captured image. Then, the processor 240 may obtain a pixel distance value between the center point coordinate of the projected image and a center point coordinate of the captured image. Thereafter, the processor 240 may obtain a camera rotation angle based on entire field of view: entire pixel = camera rotation angle: pixel distance value. For example, when the entire field of view is 80', entire pixel is 4000px, and the pixel distance value is 500px, based on 80:4000px = camera rotation angle: 500px, camera rotation angle 10', that is, yaw information may be obtained.

When posture information of the user terminal 200 is obtained, the processor 240 may correct (or rotation correction) the sixth information based on the obtained posture information.

The captured image may recognize the projection surface coordinates of the camera, but in fact, how the surface onto which the projector image is positioned in a three-dimensional manner is not known and thus, 3D rotation correction is necessary. The position may be known by a tof sensor, but it is assumed that the tof sensor is not used. In addition, it is possible to use a method of making a virtual image by assuming that a projection surface after correction is in a relation perpendicular to the gravity of a user without tilting. For example, it is assumed that virtual four points a1, a2, a3, a4 are generated and the Z-axis values of these points are all the same. In this case, by applying the inverse of the pitch value and the yaw value(i.e. the posture information) as the correction value, points b1, b2, b3, b4 of a surface in a tilted relation with the camera-captured surface are obtained. Then, a conversion equation from a surface including points b1, b2, b3, b4 to points a1, a2, a3, a4 is obtained. To be specific, a conversion equation for rotation conversion like Equation 3 below may be obtained.

【Equation 3】

$$R_{XYZ \rightarrow xyz} = R_\psi R_\theta R_\phi$$

$$= \begin{bmatrix} \cos\psi & \sin\psi & 0 \\ -\sin\psi & \cos\psi & 0 \\ 0 & 0 & 1 \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} 1 & 0 & 0 \\ 0 & \cos\phi & \sin\phi \\ 0 & -\sin\phi & \cos\phi \end{bmatrix}$$

$$= \begin{bmatrix} \cos\psi & \sin\psi & 0 \\ -\sin\psi & \cos\psi & 0 \\ 0 & 0 & 1 \end{bmatrix} \begin{bmatrix} \cos\theta & \sin\theta\sin\phi & -\sin\theta\cos\phi \\ 0 & \cos\phi & \sin\phi \\ \sin\theta & -\cos\theta\sin\phi & \cos\theta\cos\phi \end{bmatrix}$$

$$= \begin{bmatrix} \cos\psi\cos\theta & \cos\psi\sin\theta\sin\phi+\sin\phi\cos\phi & -\cos\psi\sin\theta\cos\phi+\sin\psi\sin\phi \\ -\sin\psi\cos\theta-\sin\psi\sin\theta\sin\phi+\cos\psi\cos\phi & \sin\psi\sin\theta\cos\phi+\cos\psi\sin\phi \\ \sin\theta & -\cos\theta\sin\phi & \cos\theta\cos\phi \end{bmatrix}$$

The processor 240 may obtain rotation corrected sixth information by performing rotation correction of the sixth information based on Equation 3. Accordingly, when corrected sixth information is obtained, the corrected sixth information may be used as the information about the guide area.

In the meantime, the correction based on the posture information of the user terminal 200 may be performed by the electronic apparatus 100. For example, the electronic apparatus 100 may correct the sixth information based on the sixth information received from the user terminal 200 and the posture information of the user terminal 200, and may perform keystone correction based on the corrected sixth information.

In the above embodiment, it is only described an embodiment that guide GUI is corrected based on the posture information of the user terminal 200, but depending on cases, it is also possible to correct at least one of the second information or the third information based on the posture information of the user terminal 200 and may perform a subsequent process based on at least one of corrected second information or third information.

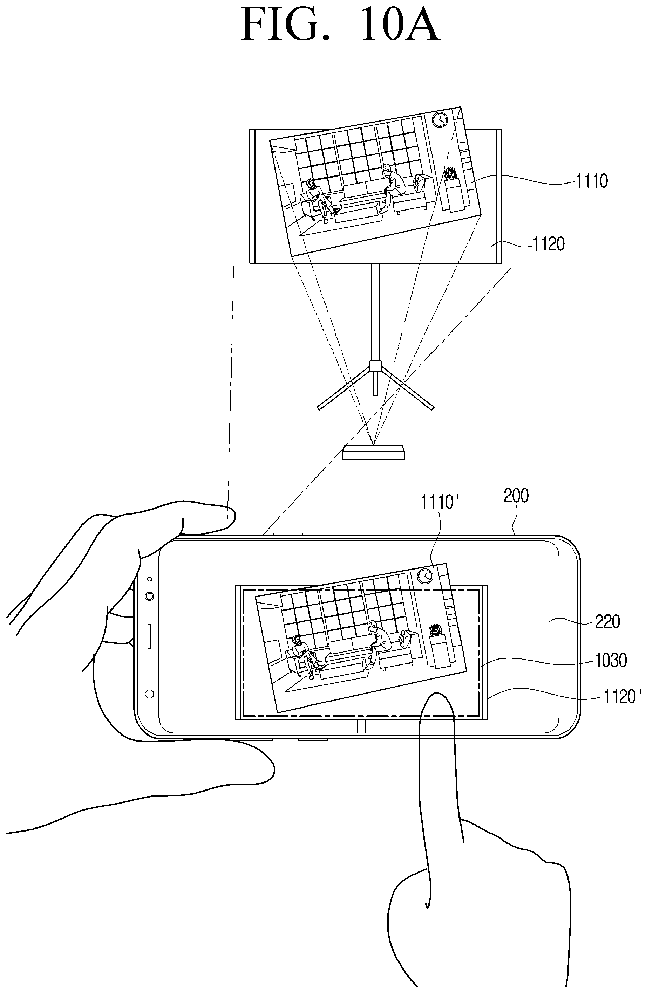

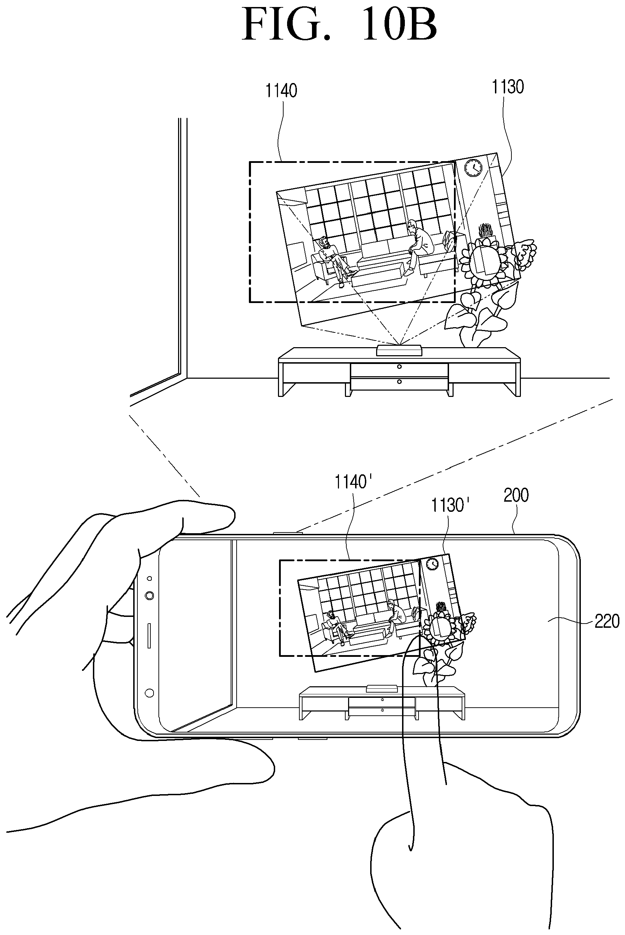

FIGS. 10A and 10B are diagrams illustrating a guide area setting environment according to an embodiment.

As shown in FIG. 10A, a projection surface may be implemented as a preset dedicated screen 1120. In this case, the user may want the projection image 1110 to be output in accordance with the screen 1120. In this case, according to various embodiments described above, the keystone correction may be performed to project an image to the screen 1120 by setting the guide area corresponding to the screen 1120 in the user terminal 200.

As shown in FIG. 10A, a specific pattern or design may be present on a projection surface. In this case, the user may want the projection image 1130 to be output by avoiding the position of the corresponding specific pattern or design. In this case, according to various embodiments described above, a guide area 1140 may be set by avoiding a corresponding specific pattern or design in the user terminal 200, and may perform keystone correction to project an image to a corresponding guide area 1140.

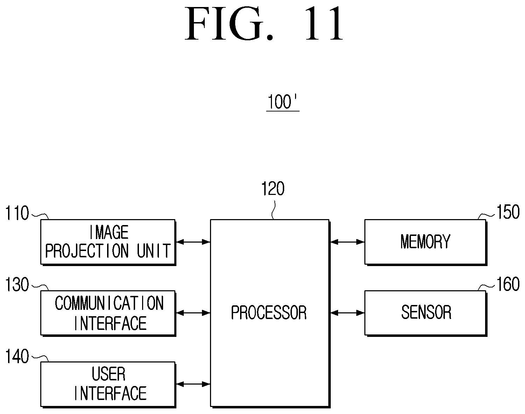

FIG. 11 is a diagram illustrating a detailed configuration of an electronic device according to an embodiment.

Referring to FIG. 11, an electronic apparatus 100' includes the image projection unit 110, the processor 120, the communication interface 130, the user interface 140, the memory 150, and the sensor 160.

The image projection unit 110 may enlarge or reduce the image according to the distance (projection distance) from the projection surface. For example, the zoom function may be performed according to the distance from the projection surface. In this case, the zoom function may include a hardware method for adjusting the size of the screen by moving the lens, and a software method for adjusting the size of the screen by cropping the image. In one or more examples, when the zoom function is performed, adjustment of the focus of the image is necessary. For example, the method of adjusting the focus includes a manual focus scheme, a motorized method, or the like.

In addition, the image projection unit 110 may automatically analyze the surrounding environment and the projection environment without user input to provide a zoom / keystone / focus function. Specifically, the projection unit 111 may automatically provide zoom / keystone / focus functions based on information about the distance between the electronic apparatus 100 and the projection surface detected through the sensor (e.g., depth camera, distance sensor, infrared sensor, illuminance sensor, etc.), information about the space in which the electronic apparatus 100 is currently located, and information about the ambient light amount.

At least one communication interface 130 (hereinafter, communication interface) may be implemented with various interfaces according to an implementation example of an electronic apparatus 100'. For example, the communication interface 120 may communicate with an external device (e.g., user terminal 200), external storage medium (e.g., USB memory), external server (e.g., webhard) through various types of digital interface, an access point (AP)-based Wi-Fi (wireless LAN network), Bluetooth, Zigbee, wired/wireless local area network (LAN), wide area network (WAN), Ethernet, IEEE 1394, high definition multimedia interface (HDMI), universal serial bus (USB), mobile high-definition link (MHL), advanced encryption standard (AES)/European broadcasting union (EBU), optical, coaxial, or the like. Here, the input image may be a digital image of any one of standard definition (SD), high definition (HD), full HD, ultra HD, but is not limited thereto.

The user interface 140 may be implemented as a device such as, for example, and without limitation, a button, a touch pad, a mouse, and a keyboard, a touch screen, a remote control transceiver capable of performing the above-described display function and operation input function, or the like. The remote control transceiver may receive a remote control signal from an external remote controller through at least one communication methods such as an infrared rays communication, Bluetooth communication, or Wi-Fi communication, or transmit the remote control signal.

The memory 150 may store data necessary for various embodiments of the disclosure. The memory 150 may be implemented as a memory embedded in the electronic apparatus 100', or may be implemented as a removable or modular memory in the electronic apparatus 100', according to the data usage purpose. For example, data for driving the electronic apparatus 100' may be stored in a memory embedded in the electronic apparatus 100', and data for an additional function of the electronic apparatus 100' may be stored in the memory detachable to the electronic apparatus 100'. A memory embedded in the electronic apparatus 100' may be a volatile memory such as a dynamic random access memory (DRAM), a static random access memory (SRAM), a synchronous dynamic random access memory (SDRAM), or a nonvolatile memory (for example, one time programmable ROM (OTPROM), programmable ROM (PROM), erasable and programmable ROM (EPROM), electrically erasable and programmable ROM (EEPROM), mask ROM, flash ROM, a flash memory (for example, NAND flash or NOR flash), a hard disk drive or a solid state drive (SSD), or the like. In the case of a memory detachably mounted to the electronic apparatus 100', the memory may be implemented as a memory card (for example, a compact flash (CF), secure digital (SD), micro secure digital (micro-SD), mini secure digital (mini-SD), extreme digital (xD), multi-media card (MMC), etc.), an external memory (for example, a USB memory) connectable to the USB port, or the like, but the memory is not limited thereto.

The sensor 160 may include various types of sensors like an acceleration sensor, a distance sensor, or the like.

The electronic apparatus 100' may further include a speaker, a tuner and a demodulator, according to an implementation example. The tuner (not shown) may receive a radio frequency (RF) broadcast signal by tuning a channel selected by a user or all the prestored channels, among the RF broadcast signal received through an antenna. The demodulator may receive and demodulate a digital intermediate frequency (DIF) signal converted by the tuner and perform channel decoding, or the like. According to one or more embodiments, an input image received through a tuner is processed through a demodulator, and then provided to the processor 120 for tone mapping according to one or more embodiments of the disclosure.

FIG. 12 is a diagram illustrating a detailed configuration of a user terminal according to an embodiment.

Referring to FIG. 12, the user terminal 200 includes a camera 210, a display 220, a communication interface 230, a processor 240, a sensor 250, a memory 260, and a user interface 270. Among the configurations illustrated in FIG. 12, a detailed description of a configuration overlapping with the configuration shown in FIG. 7 will be omitted.

The memory 260 is the same as the implementation example of the memory 150 of FIG. 11 and a detailed description will be omitted.

The user interface 140 may be implemented as a device such as a button, a touch pad, a mouse, and a keyboard, a touch screen, a remote control transceiver capable of performing the above-described display function and operation input function, or the like. The remote control transceiver may receive a remote control signal from an external remote controller through at least one communication methods such as an infrared rays communication, Bluetooth communication, or Wi-Fi communication, or transmit the remote control signal.

In particular, the user interface 140 may include a touch pad (or touch sensor) capable of receiving a user's touch input for selecting or setting the guide GUI, and may be implemented integrally with the display 120.

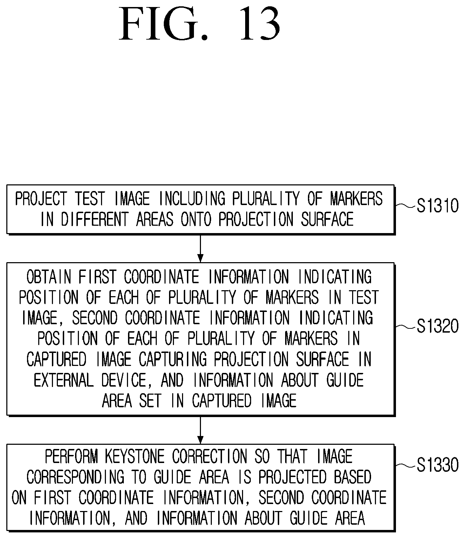

FIG. 13 is a flowchart illustrating a method for controlling an electronic device according to an embodiment.

According to a control method of the electronic apparatus of FIG. 13, a test image including a plurality of markers is projected onto the projection surface in operation S1310.

Then, first information indicating the position of each of the plurality of markers in the test image, second information indicating the position of each of the plurality of markers in the captured image obtained by capturing the projection surface in the external device, and information about the guide area set in the captured image are obtained in operation S1320.

Thereafter, keystone correction is performed so that an image corresponding to the guide area is projected based on the first information, second information, and the information about the guide area in operation S1330.

In addition, in operation S1330, third information indicating a position of each vertex area of a test image in the captured image may be obtained based on the first information and the second information, and keystone correction may be performed based on the information about the third information and the guide area.

In operation S1330, a rectangular area of a maximum size corresponding to an aspect ratio of an input image may be identified in an area where the guide area and an area identified based on the third information are overlapped, and keystone correction may be performed so that an image is projected on the identified rectangular area.

In operation S1330, based on the guide area being included in an area identified based on the third information, keystone correction may be performed to project an image onto a rectangular area of a maximum size corresponding to the aspect ratio of the input image in the area identified based on the third information.

In operation S1330, based on the area identified based on the third information being included in the guide area, keystone correction may be performed to project an image onto a rectangular area of a maximum size corresponding to the aspect ratio of the input image in the area identified based on the third information.

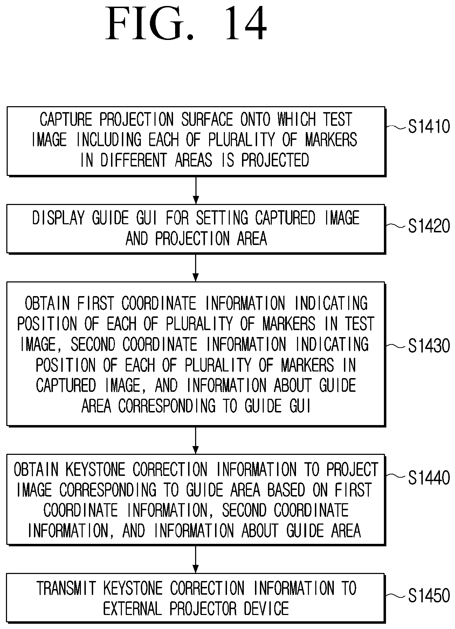

FIG. 14 is a flowchart illustrating a method for controlling a user terminal according to an embodiment.

According to the method for controlling a user terminal shown in FIG. 14, a projection surface onto which a test image including each of plurality of markers in different areas is projected is captured by using a camera in operation S1410.

The guide GUI for setting a captured image and a projection area is displayed in operation S1420. In this case, the guide GUI may be overlapped with the captured image and displayed, and the guide GUI may have a rectangular line shape.

Then, first information indicating a position of each of the plurality of markers in the test image, second information indicating a position of each of the plurality of markers in the captured image, and information about a guide area corresponding to the guide GUI are obtained in operation S1430.

Then, keystone correction information to project an image corresponding to the guide area is obtained based on the first information, second information, and the information about the guide area in operation S1440.

Then, the obtained keystone correction information is transmitted to an external projector device (e.g., electronic apparatus 100) in operation S1450.

In addition, in operation S1440, third information indicating the position of each vertex area of the test image in the captured image is obtained based on the first information and the second information, and keystone correction information may be obtained based on the third information and the information about the guide area.

In operation S1430, based on a specific guide GUI being selected by a user input to adjust at least one of a size or a position of the guide GUI, the information about the guide area corresponding to the selected guide GUI may be obtained. Here, the information about the guide area may include coordinate information about four vertex areas of the guide area in the captured image.

In addition, in operation S1420, a recommended position to provide the guide GUI may be identified by analyzing the captured image, the guide GUI may be displayed on the recommended position, or the guide GUI and the recommendation information may be displayed on the recommended position. In addition, by analyzing the captured image, a recommended size of the guide GUI may be identified, and the guide GUI of the recommended size may be displayed.

In operation S1440, information about the guide area may be corrected based on the posture information of the use terminal, and the information about the corrected guide area may be obtained as the final information about the guide area.

According to various embodiments described above, since correct keystone correction is performed based on the guide area set by a user, an image may be projected onto a projection area desired by a user. Accordingly, user convenience is improved.

In the meantime, the methods according to various embodiments of the disclosure described above may be implemented in the form of an application that may be installed in an existing electronic apparatus. The methods according to various embodiments of the disclosure described above may be performed using a deep learning-based artificial neural network (or a deep artificial neural network), that is, a learning network model.

The methods according to various embodiments may be implemented by software upgrade of a related art electronic apparatus, or hardware upgrade only.

Also, various embodiments of the disclosure described above may be performed through an embedded server provided in an electronic apparatus, or through an external server of an electronic apparatus.

Meanwhile, various embodiments of the disclosure may be implemented in software, including instructions stored on machine-readable storage media readable by a machine (e.g., a computer). An apparatus may call instructions from the storage medium, and execute the called instruction, including an electronic apparatus (for example, electronic apparatus A) according to the disclosed embodiments. When the instructions are executed by a processor, the processor may perform a function corresponding to the instructions directly or using other components under the control of the processor. The instructions may include a code generated by a compiler or a code executable by an interpreter. A machine-readable storage medium may be provided in the form of a non-transitory storage medium. Herein, the "non-transitory" storage medium may not include a signal but is tangible, and does not distinguish the case in which a data is semi-permanently stored in a storage medium from the case in which a data is temporarily stored in a storage medium.

According to one or more embodiments, the method according to the above-described embodiments may be included in a computer program product. The computer program product may be traded as a product between a seller and a consumer. The computer program product may be distributed online in the form of machine-readable storage media (e.g., compact disc read only memory (CD-ROM)) or through an application store (e.g., Play Store™) or distributed online directly. In the case of online distribution, at least a portion of the computer program product may be at least temporarily stored or temporarily generated in a server of the manufacturer, a server of the application store, or a machine-readable storage medium such as memory of a relay server.

According to various embodiments, the respective elements (e.g., module or program) of the elements mentioned above may include a single entity or a plurality of entities. According to the embodiments, at least one element or operation from among the corresponding elements mentioned above may be omitted, or at least one other element or operation may be added. Alternatively or additionally, a plurality of components (e.g., module or program) may be combined to form a single entity. In this case, the integrated entity may perform functions of at least one function of an element of each of the plurality of elements in the same manner as or in a similar manner to that performed by the corresponding element from among the plurality of elements before integration. The module, a program module, or operations executed by other elements according to variety of embodiments may be executed consecutively, in parallel, repeatedly, or heuristically, or at least some operations may be executed according to a different order, may be omitted, or the other operation may be added thereto.

While various embodiments have been illustrated and described with reference to various embodiments, the disclosure is not limited to specific embodiments or the drawings, and it will be understood by those of ordinary skill in the art that various changes in form and details may be made therein without departing from the appended claims.

**Claims**

1. An electronic apparatus (100) comprising:

 an image projection unit (110); and
 a processor (120) configured to:

 control the image projection unit to project a test image comprising a plurality of markers onto a projection surface,
 identify first information indicating a position of each of the plurality of markers in the test image, second information based on a captured image capturing the projection surface from an external device, the second information comprising coordinate information indicating a position of each of the plurality of markers in the captured image, and information about a guide area set using a guide graphical user interface, GUI, in the captured image, wherein the processor is configured to obtain the second information indicating the positions of each of the plurality of markers in a captured image capturing the projection surface and obtain the information about the guide area set in the captured image,

 obtain third information indicating positions of four vertexes of the test image in the captured image based on the first information and the second information,
 the apparatus **characterized in that** the processor is further configured to:
 identify a rectangular area of a maximum size corresponding to an aspect ratio of an input image in an area where the guide area and an area identified based on the third information are overlapped, and
 perform keystone correction so that the input image corresponding to the guide area is projected based on the first information, the second information, the third information and the information about the guide area so that the input image is projected on the identified rectangular area.

2. The electronic apparatus of claim 1, wherein the processor (120) is configured to:

 based on the guide area being included in the area identified based on the third information, perform keystone correction to project an image onto a rectangular area of a maximum size corresponding to the aspect ratio of the input image in the guide area, and
 based on the area identified based on the third information being included in the guide area, perform keystone correction to project an image onto a rectangular area of a maximum size corresponding to the aspect ratio of the input image in the area identified based on the third information.

3. The electronic apparatus of claim 1, wherein each of the plurality of markers is positioned in an area inwards by a preset ratio with reference to four vertexes of the test image,

 wherein the processor (120) is configured to obtain fourth information indicating a position of the four vertexes of the test image in the captured image based on the first information and the preset ratio,
 obtain the third information of the captured image based on the fourth information and a transformation matrix, and
 wherein the transformation matrix is obtained based on a mapping relation between the first information and the second information.

4. The electronic apparatus of claim 1, wherein the processor (120) is configured to

 correct the information about the guide area based on posture information of the external device, and
 perform the keystone correction based on the third information and the corrected information about the guide area.

5. A projector of claim 1, wherein each of the plurality of markers are in a pattern format in which a black area and a white area are configured by a preset ratio in each of a plurality of directions.

6. A user terminal (200) comprising:

 a camera (210);
 a display (220);

a communication interface (230); and
a processor (240) configured to:

control the camera to capture an image capturing a projection surface onto which a test image including a plurality of markers is projected,
control the display to display a guide graphical user interface, GUI, for setting a guide area in the captured image,
identify first information indicating a position of the plurality of markers, second information comprising coordinate information indicating a position of each of the plurality of markers based on the captured image, and information about the guide area,

identify third information indicating positions of four vertexes of the test image in the captured image based on the first information and the second information,
the user terminal **characterized in that** the processor is further configured to:
identify a rectangular area of a maximum size corresponding to an aspect ratio of an input image in an area where the guide area and an area identified based on the third information are overlapped,

obtain keystone correction information to project an image corresponding to the guide area based on the first information, the second information, the third information, the identified rectangular area and the information about the guide area, and
transmit the obtained keystone correction information to an external projector device through the communication interface.

7. The user terminal of claim 6, wherein the processor (240) is configured to identify the second information indicating a position of each of the plurality of markers in the captured image.

8. The user terminal of claim 6, wherein the processor (240) is configured to, based on a specific guide GUI being selected by a user input to adjust at least one of a size or a position of the guide GUI, obtain the information about the guide area corresponding to the selected guide GUI,
wherein the information about the guide area comprises coordinate information about four vertexes of the guide area in the captured image.

9. The user terminal of claim 6, wherein the processor (240) is configured to control the display so that the guide GUI is overlapped with the captured image and displayed, and
wherein the guide GUI has a rectangular line shape.

10. The user terminal of claim 6, wherein the processor (240) is configured to identify a recommended position to provide the guide GUI by analyzing the captured image and control the display to display the guide GUI and recommendation information on the recommended position.

11. A method of controlling an electronic apparatus, the method comprising:

projecting (S1310) a test image comprising a plurality of markers onto a projection surface;
identifying (S1320) first information indicating a position of each of the plurality of markers in the test image, second information based on a captured image capturing the projection surface from an external device, the second information comprising coordinate information indicating a position of each of the plurality of markers in the captured image, and information about a guide area set using a guide graphical user interface, GUI, in the captured image, including obtaining the second information indicating the positions of each of the plurality of markers in the captured image capturing the projection surface and obtain the information about the guide area set in the captured image;
identifying third information indicating positions of four vertexes of the test image in the captured image based on the first information and the second information;
the method **characterized by**:

identifying a rectangular area of a maximum size corresponding to an aspect ratio of an input image in an area where the guide area and an area identified based on the third information are overlapped, and
performing (S1330) keystone correction so that the input image corresponding to the guide area is projected based on the first information, the second information, the third information and the information about the guide area so that the input image is projected on the identified rectangular area.

**Patentansprüche**

1. Elektronische Vorrichtung (100), umfassend:

   eine Bildprojektionseinheit (110); und
   einen Prozessor (120), der zu Folgendem konfiguriert ist:

   Steuern der Bildprojektionseinheit, sodass sie ein Testbild, das eine Vielzahl von Markierungen umfasst, auf eine Projektionsoberfläche projiziert,
   Identifizieren erster Informationen, die eine Position jeder der Vielzahl von Markierungen auf dem Testbild angeben, zweiter Informationen basierend auf einem erfassten Bild, das die Projektionsoberfläche von einer externen Einrichtung aus erfasst, wobei die zweiten Informationen Koordinateninformationen, die eine Position jeder der Vielzahl von Markierungen auf dem erfassten Bild angeben, und Informationen über einen Führungsbereich, der unter Verwendung einer grafischen Führungsbenutzeroberfläche, Führungs-GUI, auf dem erfassten Bild eingestellt ist, umfassen, wobei der Prozessor dazu konfiguriert ist, die zweiten Informationen zu erlangen, die die Positionen jeder der Vielzahl von Markierungen auf einem erfassten Bild angeben, das die Projektionsoberfläche erfasst, und die Informationen über den Führungsbereich zu erlangen, der auf dem erfassten Bild eingestellt ist,
   Erlangen dritter Informationen, die Positionen von vier Ecken des Testbilds auf dem erfassten Bild basierend auf den ersten Informationen und den zweiten Informationen angeben,
   wobei die Vorrichtung **dadurch gekennzeichnet ist, dass** der Prozessor ferner zu Folgendem konfiguriert ist:

   Identifizieren eines rechteckigen Bereichs einer maximalen Größe, die einem Seitenverhältnis eines Eingabebilds in einem Bereich entspricht, in dem sich der Führungsbereich und ein Bereich, der basierend auf den dritten Informationen identifiziert wurde, überlappen, und
   Durchführen einer Trapezkorrektur, sodass das Eingabebild, das dem Führungsbereich entspricht, basierend auf den ersten Informationen, den zweiten Informationen, den dritten Informationen und den Informationen über den Führungsbereich projiziert wird, sodass das Eingabebild auf den identifizierten rechteckigen Bereich projiziert wird.

2. Elektronische Vorrichtung nach Anspruch 1, wobei der Prozessor (120) zu Folgendem konfiguriert ist:

   basierend darauf, dass der Führungsbereich in dem Bereich enthalten ist, der basierend auf den dritten Informationen identifiziert wurde, Durchführen einer Trapezkorrektur, um ein Bild auf einen rechteckigen Bereich einer maximalen Größe zu projizieren, die dem Seitenverhältnis des Eingabebilds in dem Führungsbereich entspricht, und
   basierend darauf, dass der Bereich, der basierend auf den dritten Informationen identifiziert wurde, in dem Führungsbereich enthalten ist, Durchführen einer Trapezkorrektur, um ein Bild auf einen rechteckigen Bereich einer maximalen Größe zu projizieren, die dem Seitenverhältnis des Eingabebilds in dem Bereich entspricht, der basierend auf den dritten Informationen identifiziert wurde.

3. Elektronische Vorrichtung nach Anspruch 1, wobei jede der Vielzahl von Markierungen in einem Bereich positioniert ist, der sich um ein voreingestelltes Verhältnis in Bezug auf vier Ecken des Testbilds nach innen befindet,

   wobei der Prozessor (120) dazu konfiguriert ist, vierte Informationen zu erlangen, die eine Position der vier Ecken des Testbilds auf dem erfassten Bild basierend auf den ersten Informationen und dem voreingestellten Verhältnis angeben,
   die dritten Informationen des erfassten Bildes basierend auf den vierten Informationen und einer Transformationsmatrix zu erlangen, und
   wobei die Transformationsmatrix basierend auf einer Zuordnungsbeziehung zwischen den ersten Informationen und den zweiten Informationen erlangt wird.

4. Elektronische Vorrichtung nach Anspruch 1, wobei der Prozessor (120) konfiguriert ist zum

Korrigieren der Informationen über den Führungsbereich basierend auf Haltungsinformationen der externen Einrichtung und

Durchführen der Trapezkorrektur basierend auf den dritten Informationen und den korrigierten Informationen über den Führungsbereich.

5. Projektor nach Anspruch 1, wobei jede der Vielzahl von Markierungen in einem Musterformat vorliegt, in dem ein schwarzer Bereich und ein weißer Bereich durch ein voreingestelltes Verhältnis in jeder einer Vielzahl von Richtungen konfiguriert sind.

6. Benutzerendgerät (200), umfassend:

eine Kamera (210);
eine Anzeige (220);
eine Kommunikationsschnittstelle (230); und
einen Prozessor (240), der zu Folgendem konfiguriert ist:

Steuern der Kamera, sodass sie ein Bild erfasst, das eine Projektionsoberfläche erfasst, auf die ein Testbild, das eine Vielzahl von Markierungen enthält, projiziert wird, Steuern der Anzeige, sodass sie eine grafische Führungsbenutzeroberfläche, Führungs-GUI, zum Einstellen eines Führungsbereichs auf dem erfassten Bild anzeigt,

Identifizieren erster Informationen, die eine Position der Vielzahl von Markierungen angeben, zweiter Informationen, die Koordinateninformationen umfassen, die eine Position jeder der Vielzahl von Markierungen basierend auf dem erfassten Bild angeben, und Informationen über den Führungsbereich,

Identifizieren dritter Informationen, die Positionen von vier Ecken des Testbilds auf dem erfassten Bild basierend auf den ersten Informationen und den zweiten Informationen angeben,

wobei das Benutzerendgerät **dadurch gekennzeichnet ist, dass** der Prozessor ferner zu Folgendem konfiguriert ist:

Identifizieren eines rechteckigen Bereichs einer maximalen Größe, die einem Seitenverhältnis eines Eingabebilds in einem Bereich entspricht, in dem sich der Führungsbereich und ein Bereich, der basierend auf den dritten Informationen identifiziert wurde, überlappen,

Erlangen von Trapezkorrekturinformationen zum Projizieren eines Bildes, das dem Führungsbereich entspricht, basierend auf den ersten Informationen, den zweiten Informationen, den dritten Informationen, dem identifizierten rechteckigen Bereich und den Informationen über den Führungsbereich und

Übertragen der erlangten Trapezkorrekturinformationen an eine externe Projektoreinrichtung über die Kommunikationsschnittstelle.

7. Benutzerendgerät nach Anspruch 6, wobei der Prozessor (240) dazu konfiguriert ist, die zweiten Informationen zu identifizieren, die eine Position jeder der Vielzahl von Markierungen auf dem erfassten Bild angeben.

8. Benutzerendgerät nach Anspruch 6, wobei der Prozessor (240) dazu konfiguriert ist, basierend darauf, dass eine spezifische Führungs-GUI durch eine Benutzereingabe ausgewählt wird, um mindestens eine von einer Größe oder einer Position der Führungs-GUI anzupassen, die Informationen über den Führungsbereich zu erlangen, der der ausgewählten Führungs-GUI entspricht, wobei die Informationen über den Führungsbereich Koordinateninformationen über vier Ecken des Führungsbereichs auf dem erfassten Bild umfassen.

9. Benutzerendgerät nach Anspruch 6, wobei der Prozessor (240) dazu konfiguriert ist, die Anzeige so zu steuern, dass die Führungs-GUI sich mit dem erfassten Bild überlappt und angezeigt wird, und wobei die Führungs-GUI eine rechteckige Linienform aufweist.

10. Benutzerendgerät nach Anspruch 6, wobei der Prozessor (240) dazu konfiguriert ist, eine empfohlene Position zu identifizieren, um die Führungs-GUI bereitzustellen, indem das erfasste Bild analysiert wird, und die Anzeige so zu steuern, dass sie die Führungs-GUI und Empfehlungsinformationen auf der empfohlenen Position anzeigt.

11. Verfahren zum Steuern einer elektronischen Vorrichtung, wobei das Verfahren Folgendes umfasst:

Projizieren (S1310) eines Testbilds, das eine Vielzahl von Markierungen umfasst, auf eine Projektionsoberfläche;

Identifizieren (S1320) erster Informationen, die eine Position jeder der Vielzahl von Markierungen auf dem Testbild angeben, zweiter Informationen basierend auf einem erfassten Bild, das die Projektionsoberfläche von einer externen Einrichtung aus erfasst, wobei die zweiten Informationen Koordinateninformationen umfassen, die eine Position jeder der Vielzahl von Markierungen auf dem erfassten Bild angeben, und von Informationen über einen Führungsbereich, der unter Verwendung einer grafischen Führungsbenutzeroberfläche, Führungs-GUI, auf dem erfassten Bild eingestellt ist, einschließlich Erlangen der zweiten Informationen, die die Positionen jeder der Vielzahl von Markierungen auf dem erfassten Bild angeben, das die Projektionsoberfläche erfasst, und Erlangen der Informationen über den Führungsbereich, der auf dem erfassten Bild eingestellt ist;
Identifizieren dritter Informationen, die Positionen von vier Ecken des Testbilds auf dem erfassten Bild basierend auf den ersten Informationen und den zweiten Informationen angeben;
wobei das Verfahren durch Folgendes gekennzeichnet ist:

Identifizieren eines rechteckigen Bereichs einer maximalen Größe, die einem Seitenverhältnis eines Eingabebilds in einem Bereich entspricht, in dem sich der Führungsbereich und ein Bereich, der basierend auf den dritten Informationen identifiziert wurde, überlappen, und
Durchführen (S1330) einer Trapezkorrektur, sodass das Eingabebild, das dem Führungsbereich entspricht, basierend auf den ersten Informationen, den zweiten Informationen, den dritten Informationen und den Informationen über den Führungsbereich projiziert wird, sodass das Eingabebild auf den identifizierten rechteckigen Bereich projiziert wird.

**Revendications**

1. Appareil électronique (100) comprenant :

   une unité de projection d'image (110) ; et
   un processeur (120) configuré pour :

   commander l'unité de projection d'image pour projeter une image d'essai comprenant une pluralité de marqueurs sur une surface de projection,
   identifier des premières informations indiquant une position de chacun de la pluralité de marqueurs dans l'image d'essai, des deuxièmes informations basées sur une image capturée capturant la surface de projection à partir d'un dispositif externe, les deuxièmes informations comprenant des informations de coordonnées indiquant une position de chacun de la pluralité de marqueurs dans l'image capturée, et des informations concernant une zone de guidage définie à l'aide d'une interface utilisateur graphique de guidage, GUI, dans l'image capturée, ledit processeur étant configuré pour obtenir les deuxièmes informations indiquant les positions de chacun de la pluralité de marqueurs dans une image capturée capturant la surface de projection et obtenir les informations concernant la zone de guidage définie dans l'image capturée,
   obtenir des troisièmes informations indiquant les positions de quatre sommets de l'image d'essai dans l'image capturée sur la base des premières informations et des deuxièmes informations,
   l'appareil étant **caractérisé en ce que** le processeur est en outre configuré pour :

   identifier une zone rectangulaire d'une taille maximale correspondant à un rapport de forme d'une image d'entrée dans une zone où la zone de guidage et une zone identifiée sur la base des troisièmes informations se chevauchent, et
   réaliser une correction de trapèze afin que l'image d'entrée correspondant à la zone de guidage soit projetée sur la base des premières informations, des deuxièmes informations, des troisièmes informations et des informations concernant la zone de guidage afin que l'image d'entrée soit projetée sur la zone rectangulaire identifiée.

2. Appareil électronique de la revendication 1, ledit processeur (120) étant configuré pour :

   sur la base que la zone de guidage est comprise dans la zone identifiée sur la base des troisièmes informations, réaliser une correction de trapèze pour projeter une image sur une zone rectangulaire d'une taille maximale correspondant au rapport de forme de l'image d'entrée dans la zone de guidage, et
   sur la base de la zone identifiée sur la base des troisièmes informations comprises dans la zone de guidage, réaliser une correction de trapèze pour projeter une image sur une zone rectangulaire d'une taille maximale correspondant au rapport de forme de l'image d'entrée dans la zone identifiée sur la base des troisièmes informations.

3. Appareil électronique de la revendication 1, chacun de la pluralité de marqueurs étant positionné dans une zone vers l'intérieur selon un rapport prédéfini concernant quatre sommets de l'image d'essai,

ledit processeur (120) étant configuré pour obtenir des quatrièmes informations indiquant une position des quatre sommets de l'image d'essai dans l'image capturée sur la base des premières informations et du rapport prédéfini, obtenir les troisièmes informations de l'image capturée sur la base des quatrièmes informations et d'une matrice de transformation, et

ladite matrice de transformation étant obtenue sur la base d'une relation de mise en correspondance entre les premières informations et les deuxièmes informations.

4. Appareil électronique de la revendication 1, ledit processeur (120) étant configuré pour

corriger les informations concernant la zone de guidage sur la base des informations de posture du dispositif externe, et

réaliser la correction de trapèze sur la base des troisièmes informations et des informations corrigées concernant la zone de guidage.

5. Projecteur de la revendication 1, chacun de la pluralité de marqueurs étant dans un format de motif dans lequel une zone noire et une zone blanche sont configurées par un rapport prédéfini dans chacune d'une pluralité de directions.

6. Terminal d'utilisateur (200) comprenant :

une caméra (210) ;
un dispositif d'affichage (220) ;
une interface de communication (230) ; et
un processeur (240) configuré pour :

commander la caméra pour capturer une image capturant une surface de projection sur laquelle une image d'essai comprenant une pluralité de marqueurs est projetée,
commander le dispositif d'affichage pour afficher une interface utilisateur graphique, GUI, de guidage pour définir une zone de guidage dans l'image capturée,
identifier des premières informations indiquant une position de la pluralité de marqueurs, des deuxièmes informations comprenant des informations de coordonnées indiquant une position de chacun de la pluralité de marqueurs sur la base de l'image capturée, et des informations concernant la zone de guidage
identifier des troisièmes informations indiquant les positions de quatre sommets de l'image d'essai dans l'image capturée sur la base des premières informations et des deuxièmes informations,
le terminal utilisateur étant **caractérisé en ce que** le processeur est en outre configuré pour :

identifier une zone rectangulaire d'une taille maximale correspondant à un rapport de forme d'une image d'entrée dans une zone où la zone de guidage et une zone identifiée sur la base des troisièmes informations se chevauchent, obtenir des informations de correction de trapèze pour projeter une image correspondant à la zone de guidage sur la base des premières informations, des deuxièmes informations, des troisièmes informations, de la zone rectangulaire identifiée et des informations concernant la zone de guidage, et
transmettre les informations de correction de trapèze obtenues à un dispositif projecteur externe par l'intermédiaire de l'interface de communication.

7. Terminal utilisateur de la revendication 6, ledit processeur (240) étant configuré pour identifier les deuxièmes informations indiquant une position de chacun de la pluralité de marqueurs dans l'image capturée.

8. Terminal utilisateur de la revendication 6, ledit processeur (240) étant configuré pour, sur la base qu'une GUI de guidage spécifique est sélectionnée par une entrée utilisateur pour régler au moins l'une d'une taille ou d'une position de la GUI de guidage, obtenir les informations concernant la zone de guidage correspondant à la GUI de guidage sélectionnée,

lesdites informations concernant la zone de guidage comprenant des informations de coordonnées concernant quatre sommets de la zone de guidage dans l'image capturée.

9. Terminal utilisateur de la revendication 6, ledit processeur (240) étant configuré pour commander le dispositif d'affichage afin que la GUI de guidage soit chevauchée par l'image capturée et affichée, et ladite GUI de guidage possédant une forme de ligne rectangulaire.

10. Terminal utilisateur de la revendication 6, ledit processeur (240) étant configuré pour identifier une position recommandée pour fournir la GUI de guidage en analysant l'image capturée et en commandant le dispositif d'affichage pour afficher la GUI de guidage et les informations de recommandation sur la position recommandée.

11. Procédé de commande d'un appareil électronique, le procédé comprenant :

la projection (S1310) d'une image d'essai comprenant une pluralité de marqueurs sur une surface de projection ;
l'identification (S1320) des premières informations indiquant une position de chacun de la pluralité de marqueurs dans l'image d'essai, des deuxièmes informations basées sur une image capturée capturant la surface de projection à partir d'un dispositif externe, les deuxièmes informations comprenant des informations de coordonnées indiquant une position de chacun de la pluralité de marqueurs dans l'image capturée, et des informations concernant une zone de guidage définie à l'aide d'une interface utilisateur graphique, GUI, de guidage dans l'image capturée, comprenant l'obtention des deuxièmes informations indiquant les positions de chacun de la pluralité de marqueurs dans l'image capturée capturant la surface de projection et l'obtention des informations concernant la zone de guidage définie dans l'image capturée ;
l'identification des troisièmes informations indiquant les positions de quatre sommets de l'image d'essai dans l'image capturée sur la base des premières informations et des deuxièmes informations ;
le procédé étant **caractérisé par** :

l'identification d'une zone rectangulaire d'une taille maximale correspondant à un rapport de forme d'une image d'entrée dans une zone où la zone de guidage et une zone identifiée sur la base des troisièmes informations se chevauchent, et
la réalisation (S1330) d'une correction de trapèze afin que l'image d'entrée correspondant à la zone de guidage soit projetée sur la base des premières informations, des deuxièmes informations, des troisièmes informations et des informations concernant la zone de guidage afin que l'image d'entrée soit projetée sur la zone rectangulaire identifiée.

# FIG. 1A

$$H_{4point} = \begin{pmatrix} \Delta u1 & \Delta u1 \\ \Delta u2 & \Delta u2 \\ \Delta u3 & \Delta u3 \\ \Delta u4 & \Delta u4 \end{pmatrix}$$

$\updownarrow$ 1-to-1 mapping

$$H_{matrix} = \begin{pmatrix} H11 & H12 & H13 \\ H21 & H22 & H23 \\ H31 & H32 & H33 \end{pmatrix}$$

Homography matrix
$\downarrow$
$$x = HX$$

2D
Image plane
(retina,film,canvas)

2D
World plane

# FIG. 1B

# FIG. 2

100

110

120

IMAGE PROJECTION UNIT ← → PROCESSOR

# FIG. 3A

# FIG. 3B

# FIG. 3C

# FIG. 3D

# FIG. 3E

# FIG. 4A

411(P₁)    412(P₂)

413(P₃)    414(P₄)

# FIG. 4B

411($C_1$)  412($C_2$)

413($C_3$)  414($C_4$)

# FIG. 5A

# FIG. 5B

# FIG. 5C

# FIG. 6A

# FIG. 6B

# FIG. 6C

# FIG. 7

200

# FIG. 8A

# FIG. 8B

# FIG. 8C

# FIG. 9A

# FIG. 9B

$$\theta = \tan^{-1}\left(\frac{y}{z}\right)$$

Y: Y OUTPUT VALUE OF ACCELERATION SENSOR
Z: Z OUTPUT VALUE OF ACCELERATION SENSOR

# FIG. 10A

# FIG. 10B

# FIG. 11

<u>100'</u>

# FIG. 12

200'

# FIG. 13

```
┌─────────────────────────────────────────────────┐
│ PROJECT TEST IMAGE INCLUDING PLURALITY OF MARKERS │ ~S1310
│   IN DIFFERENT AREAS ONTO PROJECTION SURFACE      │
└─────────────────────────────────────────────────┘
                        │
                        ▼
┌─────────────────────────────────────────────────┐
│ OBTAIN FIRST COORDINATE INFORMATION INDICATING    │
│ POSITION OF EACH OF PLURALITY OF MARKERS IN TEST  │
│ IMAGE, SECOND COORDINATE INFORMATION INDICATING   │ ~S1320
│   POSITION OF EACH OF PLURALITY OF MARKERS IN     │
│ CAPTURED IMAGE CAPTURING PROJECTION SURFACE IN    │
│  EXTERNAL DEVICE, AND INFORMATION ABOUT GUIDE     │
│           AREA SET IN CAPTURED IMAGE              │
└─────────────────────────────────────────────────┘
                        │
                        ▼
┌─────────────────────────────────────────────────┐
│   PERFORM KEYSTONE CORRECTION SO THAT IMAGE       │
│ CORRESPONDING TO GUIDE AREA IS PROJECTED BASED    │ ~S1330
│ ON FIRST COORDINATE INFORMATION, SECOND COORDINATE│
│  INFORMATION, AND INFORMATION ABOUT GUIDE AREA    │
└─────────────────────────────────────────────────┘
```

# FIG. 14

```
┌─────────────────────────────────────────┐
│ CAPTURE PROJECTION SURFACE ONTO WHICH TEST│
│ IMAGE INCLUDING EACH OF PLURALITY OF MARKERS│──S1410
│       IN DIFFERENT AREAS IS PROJECTED     │
└─────────────────────────────────────────┘
                    │
                    ▼
┌─────────────────────────────────────────┐
│ DISPLAY GUIDE GUI FOR SETTING CAPTURED IMAGE│──S1420
│            AND PROJECTION AREA            │
└─────────────────────────────────────────┘
                    │
                    ▼
┌─────────────────────────────────────────┐
│ OBTAIN FIRST COORDINATE INFORMATION INDICATING│
│ POSITION OF EACH OF PLURALITY OF MARKERS IN TEST│
│ IMAGE, SECOND COORDINATE INFORMATION INDICATING│──S1430
│  POSITION OF EACH OF PLURALITY OF MARKERS IN│
│  CAPTURED IMAGE, AND INFORMATION ABOUT GUIDE│
│      AREA CORRESPONDING TO GUIDE GUI      │
└─────────────────────────────────────────┘
                    │
                    ▼
┌─────────────────────────────────────────┐
│ OBTAIN KEYSTONE CORRECTION INFORMATION TO PROJECT│
│ IMAGE CORRESPONDING TO GUIDE AREA BASED ON FIRST│──S1440
│     COORDINATE INFORMATION, SECOND COORDINATE│
│ INFORMATION, AND INFORMATION ABOUT GUIDE AREA│
└─────────────────────────────────────────┘
                    │
                    ▼
┌─────────────────────────────────────────┐
│ TRANSMIT KEYSTONE CORRECTION INFORMATION TO│──S1450
│         EXTERNAL PROJECTOR DEVICE         │
└─────────────────────────────────────────┘
```

**REFERENCES CITED IN THE DESCRIPTION**

**Patent documents cited in the description**

- US 2009091714 A1
- JP 2001083949 A
- KR 20090090682 A
- WO 2006008791 A1
- JP 2013192098 A